# EUROPÄISCHE PATENTSCHRIFT

(11) **EP 2 422 243 B1**
(45) Veröffentlichungstag und Bekanntmachung des Hinweises auf die Patenterteilung: **19.06.2013**
(21) Anmeldenummer: 10717544.0
(22) Anmeldetag: 20.04.2010
(51) Int. Cl.: G05B 9/03

(54) **SICHERHEITSSTEUERUNG ZUM STEUERN EINER AUTOMATISIERTEN ANLAGE UND VERFAHREN ZUM ERSTELLEN EINES ANWENDERPROGRAMMS FÜR EINE SICHERHEITSSTEUERUNG**
SAFETY CONTROLLER FOR AN AUTOMATED PLANT AND METHOD FOR CREATING AN APPLICATION PROGRAM FOR A SAFETY CONTROLLER
COMMANDE DE SÉCURITÉ POUR COMMANDER UNE INSTALLATION AUTOMATISÉE ET PROCÉDÉ DE GÉNÉRATION D'UN PROGRAMME D'APPLICATION POUR UNE COMMANDE DE SÉCURITÉ

(30) Priorität: 20.04.2009 DE 102009019088
(43) Veröffentlichungstag der Anmeldung: 29.02.2012
(73) Patentinhaber: Pilz GmbH & Co. KG, 73760 Ostfildern (DE)
(72) Erfinder: WOEHRLE, Stefan, 73760 Ostfildern (DE); REUSCH, Matthias, 72531 Hohenstein (DE)
(74) Vertreter: Duhme, Torsten
(86) Internationale Anmeldenummer: PCT/EP2010/002437
(87) Internationale Veröffentlichungsnummer: WO 2010/121797

(56) Entgegenhaltungen:
- WO-A1-2007/116798
- DE-A1- 10 025 085
- DE-A1- 19 906 695

## Beschreibung

Die vorliegende Erfindung betrifft eine Sicherheitssteuerung zum Steuern einer automatisierten Anlage gemäß einem in der Sicherheitssteuerung ablaufenden Anwenderprogramm und ein Verfahren zum Erstellen eines Anwenderprogramms für eine solche Sicherheitssteuerung.

Eine Sicherheitssteuerung im Sinne der vorliegenden Erfindung ist eine Vorrichtung, die von Sensoren gelieferte Eingangssignale aufnimmt und daraus durch logische Verknüpfungen und eventuell weitere Signal- oder Datenverarbeitungsschritte Ausgangssignale erzeugt. Die Ausgangssignale sind typischerweise Aktuatoren zugeführt, die in Abhängigkeit von den Ausgangssignalen Aktionen oder Reaktionen in einer gesteuerten Anlage bewirken.

Ein bevorzugtes Anwendungsgebiet für derartige Sicherheitssteuerungen ist die Überwachung von Not-Aus-Tastern, Zwei-Hand-Steuerungen, Schutztürschaltem oder Lichtgittern im Bereich der Maschinensicherheit. Derartige Sensoren werden verwendet, um beispielsweise eine Maschine, von der im Betrieb eine Gefahr für Menschen oder materielle Güter ausgeht, abzusichern. Beim Öffnen der Schutztür oder beim Betätigen des Not-Aus-Tasters wird jeweils ein Signal erzeugt, das der Sicherheitssteuerung als Eingangssignal zugeführt ist. In Reaktion darauf schaltet die Sicherheitssteuerung dann mit Hilfe eines Aktuators den gefahrbringenden Teil der Maschine ab.

Charakteristisch an einer Sicherheitssteuerung ist im Gegensatz zu einer "normalen" Steuerung, dass die Sicherheitssteuerung selbst dann, wenn bei ihr oder einem mit ihr verbundenen Gerät eine Fehlfunktion auftritt, stets einen sicheren Zustand der gefahrbringenden Anlagen oder Maschinen gewährleistet. Daher werden bei Sicherheitssteuerungen extrem hohe Anforderungen an die eigene Fehlersicherheit gestellt, was einen erheblichen Aufwand bei der Entwicklung und Herstellung zur Folge hat.

In der Regel benötigen Sicherheitssteuerungen vor ihrer Verwendung eine besondere Zulassung durch zuständige Aufsichtsbehörden, wie beispielsweise in Deutschland durch die Berufsgenossenschaften oder den TÜV. Die Sicherheitssteuerung muss dabei vorgegebene Sicherheitsstandards einhalten, die beispielsweise in der europäischen Norm EN 954-1, der Norm IEC 61508, der Norm EN ISO 13849-1 und vergleichbaren Normen niedergelegt sind. Im Folgenden wird daher unter einer Sicherheitssteuerung eine Vorrichtung verstanden, die zumindest die Sicherheitskategorie 3 der EN 954-1 erfüllt oder deren Safety Integrity Level (SIL) zumindest die Stufe 2 gemäß IEC 61508 erreicht.

Eine programmierbare Sicherheitssteuerung bietet dem Anwender die Möglichkeit, die logischen Verknüpfungen und gegebenenfalls weitere Signal- oder Datenverarbeitungsschritte mit Hilfe einer Software, dem so genannten Anwenderprogramm, seinen Bedürfnissen entsprechend individuell festzulegen. Daraus resultiert eine große Flexibilität im Vergleich zu früheren Lösungen, bei denen die logischen Verknüpfungen durch eine definierte Verdrahtung zwischen verschiedenen Sicherheitsrelais erzeugt wurden.

Bei großen und komplexen Anlagen nach dem Stand der Technik kommen häufig verteilte Sicherheitssteuerungen zum Einsatz. Verteilte Sicherheitssteuerungen beinhalten eine Vielzahl von räumlich verteilten Steuerungskomponenten (Steuereinheiten, Sensoren und Aktuatoren), die über ein Kommunikationsnetzwerk miteinander kommunizieren. Die Steuerungskomponenten sind Anlagenkomponenten zugeordnet. Anlagenkomponenten sind die Bestandteile der gesteuerten Anlage, wie etwa verschiedene Bearbeitungsstationen, Förderbänder, einzelne Roboter o.ä. Hinsichtlich der Hardware zeichnen sich verteilte Sicherheitssteuerungen durch eine große Flexibilität aus. So kann eine Sicherheitssteuerung aus einer Vielzahl unterschiedlicher Steuerungskomponenten aufgebaut und somit sehr flexibel an die Gegebenheiten der zu steuernden Anlage angepasst werden. Hinsichtlich der Konfiguration der Kommunikationsbeziehungen zwischen den einzelnen Steuerungskomponenten und hinsichtlich der Belange der Datenverarbeitung sind verteilte Sicherheitssteuerungen jedoch noch nicht optimal. Sie benötigen vor Inbetriebnahme einen hohen Konfigurationsaufwand. Es muss für jede Steuereinheit individuell festgelegt werden, welche Eingangssignale eingelesen und welche Ausgangssignale ausgegeben werden. Zudem muss der Anwender die Kommunikationsbeziehungen aller Komponenten des Steuerungssystems individuell festlegen. Dies beinhaltet auch zeitliche Parameter, die bei der Kommunikation eingehalten werden müssen.

Die Konfiguration der Kommunikationsbeziehungen zwischen den einzelnen Steuerungskomponenten umfasst insbesondere folgende Konfigurationsparameter: Konfigurationsparameter die definieren, was für Daten übertragen werden, d.h. welchen Datentyp die zu übertragenden Daten haben; Konfigurationsparameter die definiereri, von wo nach wo Daten übertragen werden, d.h. zwischen welchen Steuerungskomponenten ein Datenaustausch stattfindet; Konfigurationsparameter, die definieren, wie häufig einzelne Daten zu übertragen sind; Konfigurationsparameter die definieren, wie schnell die Sicherheitssteuerung hinsichtlich der Sicherheitsfunktion auf äußere Gegebenheiten reagieren muss.

DE 100 25 085 A1 offenbart eine Sicherheitssteuerung mit einer Vielzahl von Steuerungskomponenten, die über einen Datenbus miteinander verbunden sind. Beim Programmieren der Sicherheitssteuerung muss der Anwender die Kommunikationsbeziehungen zwischen den verteilten Steuerungskomponenten festlegen. Über eine Konfigurationsschnittstelle erhält jede Steuerungskomponente einen Datensatz, der zum Beispiel eine Reaktionszeit, Teilnehmeradresse, Konfiguration des gesamten Bussystems, den Zustand anderer Teilnehmer beinhaltet. Außerdem erhält jede Steuerungskomponente ein Programm, das sich nach den angeschlossenen Ausgängen orientiert. Zur Verteilung der programmierbaren Funktionen wird ein Compiler benötigt, der die logischen Pfade entsprechend der gewünschten Ausgangsfunktion berechnet.

DE 199 06 695 A1 offenbart ein Verfahren zur automatischen Dezentralisierung von Programmen in Steuerungseinrichtungen und zur Verteilung von Intelligenz. Mithilfe des Verfahrens sollen Programme für speicherprogrammierbare Steuerungen automatisch aufgeteilt und auf dezentrale Einheiten verteilt werden. Dazu wird eine Zuordnungsliste erzeugt, und Programmteile, die sich auf Ausgänge beziehen, werden als Modulprogramme erstellt. Die Steuerungskomponenten enthalten ihre speziellen Modulprogramme über das Bussystem.

WO 2007/116798 A1 offenbart ein Steuerungssystem, das eine Anwenderdatei ohne Programmiertool zwischen Steuerungskomponenten übertragen kann. Eine der Steuerungskomponenten besitzt eine Schnittstelle für eine Speicherkarte, von der die Anwenderdatei zu ihrer Zieladresse übertragen wird.

Es ist eine Aufgabe der vorliegenden Erfindung, eine Sicherheitssteuerung und ein Verfahren der eingangs genannten Art anzugeben, die eine einfache und schnelle Inbetriebnahme ermöglichen.

Diese Aufgabe wird durch eine Sicherheitssteuerung gemäß Anspruch 1 und ein Verfahren gemäß Anspruch 13 gelöst.

Vorteilhafterweise beinhaltet das Erstellen des Anwenderprogramms über das reine Erstellen des Quellcodes und des Maschinencodes hinaus auch das Verteilen des Maschinencodes und der Konfigurationsdaten auf zumindest einen Teil der Steuerungskomponenten.

Der neuen Sicherheitssteuerung und dem neuen Verfahren liegt die Idee zugrunde, die für eine Konfiguration der Kommunikationsbeziehungen benötigten Konfigurationsdaten in Abhängigkeit von zuvor bestimmten Zuordnungsdaten automatisch zu ermitteln und diese dann über eine Konfigurationsschnittstelle in die Sicherheitssteuerung zu übertragen. Die Konfiguration wird selbsttätig entweder durch das Computerprogramm, mit dem das Anwenderprogramm für die Sicherheitssteuerung erstellt wird, oder durch ein weiteres, speziell für das Konfigurieren eingerichtetes Computerprogramm, erstellt. Die anfänglichen Vorgaben für die Konfiguration werden beispielweise aus dem Anwenderprogramm oder von den für das Erstellen des Anwenderprogramms vorgenommenen Eingaben hergeleitet. Dabei soll zwar noch vorgesehen sein, dass der Programmierer des Anwenderprogramms Eingaben, die für die Konfiguration der Kommunikationsbeziehungen relevant sind, vornehmen kann. Das eigentliche Konfigurieren muss er jedoch nicht durchführen. Dies erfolgt selbstständig durch besagtes Computerprogramm. Nachfolgend wird anstelle der Formulierung "Konfiguration der Kommunikationsbeziehungen zwischen den einzelnen Steuerungskomponenten" abkürzend die Formulierung "Konfiguration der Kommunikationsbeziehungen" verwendet.

Die Konfigurationsdaten legen zumindest eine veränderbare Eigenschaft des Datenbusses und/oder zumindest eine veränderbare Eigenschaft der in den Steuerungskomponenten enthaltenen Datenbusschnittstellen fest. Dadurch wird eine automatische Konfiguration der Kommunikationsbeziehungen ermöglicht. Es vereinfacht sich folglich die aus dem Erstellen des Anwenderprogramms und der Konfiguration der Kommunikationsbeziehungen bestehende Projektierung der Sicherheitssteuerung. Insgesamt reduziert sich der Zeitaufwand und somit auch die Kosten für die Realisierung einer Sicherheitssteuerung.

Die automatische Konfiguration der Kommunikationsbeziehungen erhöht zudem die Fehlersicherheit der Sicherheitssteuerung. Durch den Automatismus werden Fehlerquellen, die bei einer nicht automatisch ablaufenden Konfiguration vorhanden sein können, ausgeschlossen. Zudem wird die Flexibilität erhöht. Bei Änderungen im Projekt oder in der realisierten Sicherheitssteuerung können hieraus ggf. resultierende angepasste Konfigurationsdaten in einfacher Art und Weise ermittelt und in die Sicherheitssteuerung übertragen werden. Solche Änderungen können beispielsweise bei folgenden Konstellationen erforderlich sein: Wird beispielsweise nach der Projektierung einer Sicherheitssteuerung im Probebetrieb festgestellt, dass die Performance der Sicherheitssteuerung bezüglich eines Parameters zu gering ausfällt, so kann dies durch Austausch einer bereits vorhandenen Steuerungskomponente oder durch Einfügen einer zusätzlichen Steuerungskomponente behoben werden. Bei beiden Änderungen ist eine Anpassung der Konfigurationsdaten erforderlich, da eine Änderung oder Ergänzung der Kommunikationsbeziehungen erfolgt ist. Ein weiteres Beispiel ist der Austausch einer defekten Steuerungskomponente bei einer bereits in Betrieb befindlichen Sicherheitssteuerung.

Zudem wird durch eine automatische Konfiguration der Kommunikationsbeziehungen eine Optimierung des Datenaustauschs zwischen den einzelnen Steuerungskomponenten erreicht. Dies eröffnet einen größeren Spielraum, die Vorgaben des Betreibers der zu steuernden Anlage hinsichtlich der Reaktionszeit der Sicherheitssteuerung zu erfüllen. Insgesamt lassen sich somit kürzere Reaktionszeiten realisieren. Vorzugsweise legen die Konfigurationsdaten sowohl die für den Datenaustausch relevanten Eigenschaften des Datenbusses als auch die für den Datenaustausch relevanten Eigenschaften der in den Steuerungskomponenten enthaltenen Datenbusschnittstellen fest. Dabei kann es sich teilweise um dieselben oder teilweise um unterschiedliche Eigenschaften handeln.

Die Zuordnungsdaten repräsentieren vorteilhafterweise Zuordnungen einzelner Teilumfänge des Anwenderprogramms untereinander oder Zuordnungen einzelner Teilumfänge des Anwenderprogramms zu einzelnen Steuerungskomponenten. Aus diesen Zuordnungen ergeben sich die für die Konfiguration der Kommunikationsbeziehungen relevante Daten. So lassen sich aus diesen Zuordnungen beispielsweise Angaben herleiten, was für Daten übertragen werden bzw. von wo nach wo diese Daten übertragen werden. Ein Teilumfang des Anwenderprogramms kann beispielsweise ein in dem Anwenderprogramm enthaltenes Programmmodul sein oder eine Vielzahl von Steueranweisungen.

Die Verarbeitungszuordnungsdaten repräsentieren eine Verarbeitungsreihenfolge und somit einen Datenfluss zwischen einzelnen Steueranweisungen. Es handelt sich um eine softwaretechnische oder programmiertechnische Zuordnung, die wiedergibt, welche Daten zwischen einzelnen Steueranweisungen ausgetauscht werden. Dadurch lässt sich der Datenfluss umfassend darstellen, was eine optimale Auslegung der Konfigurationsdaten und somit Konfiguration der Kommunikationsbeziehungen ermöglicht. Zudem ermöglicht dies eine modularisierte Konfiguration der Kommunikationsbeziehungen und letztlich eine einfache Handhabe.

Vorteilhafterweise handelt es sich bei dem Teil der Steueranweisungen um diejenigen Steueranweisungen, die in einem Programmmodul enthalten sind. Alternativ umfasst der Teil der Steueranweisungen einen ersten Teilumfang an Steueranweisungen, der in einem ersten Programmmodul enthalten ist und einen zweiten Teilumfang an Steueranweisungen, der in einem zweiten Programmmodul enthalten ist. Dadurch lässt sich der Datenaustausch zwischen einzelnen Programmmodulen optimieren.

Das Einführen einer Terminierungszykluszeit bewirkt, dass Sicherheitssteuerungen, die von Haus aus hinsichtlich der Reaktionszeit nicht unbedingt ein deterministisches Verhalten aufweisen, diesbezüglich ein deterministisches Verhalten zeigen. Durch die Terminierungszykluszeit sind äquidistant beabstandete Zeitpunkte definiert, zu denen Daten, die von Daten erzeugenden Steueranweisungen erzeugt werden, einheitlich vorliegen müssen. Dies bewirkt ein deterministisches Verhalten. Vorzugsweise ist für die Vielzahl von Steueranweisungen, denen die Terminierungszykluszeit zugrunde liegt, durch eine Anzahl von Verarbeitungszuordnungen eine Verarbeitungsreihenfolge definiert. Vorzugsweise ist zumindest ein Teil der individuellen Gültigkeitszeitdauern so definiert, dass diese jeweils zu einem der durch die Terminierungszykluszeit definierten Zeitpunkt ablaufen, wobei die einzelnen Gültigkeitszeitdauern vorzugsweise zu unterschiedlichen Zeitpunkten ablaufen.

Die oben genannte Aufgabe ist daher vollständig gelöst.

In einer weiteren Ausgestaltung der Erfindung ist das Anwenderprogramm aus einer Vielzahl von Programmmodulen aufgebaut, wobei die Zuordnungsdaten Programmmodulzuordnungsdaten umfassen, wobei die Programmmodulzuordnungsdaten eine Anzahl von Programmmodulzuordnungen repräsentieren, wobei die Programmmodulzuordnungen jeweils definieren, welcher Steuerungskomponente das jeweilige Programmmodul zugeordnet ist.

Die Programmmodulzuordnungsdaten repräsentieren eine räumliche Aufteilung des Anwenderprogramms auf die verteilt aufgebaute Sicherheitssteuerung. Es handelt sich um eine hardwaretechnische Zuordnung, die wiedergibt, welches Programmmodul welcher Steuerungskomponente zugeordnet ist. Somit ist für die einzelnen Programmmodule der jeweilige Verarbeitungsort innerhalb der Sicherheitssteuerung bekannt. Diese Information ist für die Realisierung eines Datenaustauschs innerhalb einer verteilt aufgebauten Sicherheitssteuerung von Bedeutung. Aus dieser Information lässt sich herleiten, welche Daten in welcher Steuerungskomponente erzeugt und welche Daten in welcher Steuerungskomponente konsumiert werden.

Zudem ermöglicht diese Maßnahme, die Datenübertragung innerhalb einer verteilt aufgebauten Sicherheitssteuerung gemäß unterschiedlichster Aspekte zu optimieren. Gemäß einem ersten Aspekt werden die einzelnen Programmmodule so den einzelnen Steuerungskomponenten zugeordnet, dass die Programmmodule und somit die durch diese jeweils definierten Teilumfänge des Anwenderprogramms vor Ort verarbeitet werden. Dadurch wird der Datenaustausch zwischen einzelnen Steuerungskomponenten reduziert. Vor Ort bedeutet in diesem Zusammenhang, dass die Programmmodule dort verarbeitet werden, wo für deren Verarbeitung benötigte Daten verfügbar sind. Also beispielsweise in einer Steuereinheit, die sich in unmittelbarer Nähe eines Sensors befindet, dessen Sensorsignal als Eingangssignal für die Ermittlung eines Ansteuersignals für einen Aktuator benötigt wird. Diese Zuordnung ermöglicht die Realisierung kurzer Reaktionszeiten. Vorzugsweise wird die Zuordnung der Programmmodule zu den einzelnen Steuerungskomponenten vom Ersteller des Anwenderprogramms vorgenommen.

Gemäß einem zweiten Aspekt werden die einzelnen Programmmodule den einzelnen Steuerungskomponenten automatisch durch das Computerprogramm, mit dem das Anwenderprogramm erstellt wird, zugeordnet. Diese Zuordnung kann beispielsweise anhand von Datenverarbeitungskennzahlen erfolgen. Bei dieser Zuordnung lassen sich in der Sicherheitssteuerung vorhandene Ressourcen, beispielsweise Datenspeicher oder Mikroprozessoren, optimal nutzen. Dies ermöglicht eine optimale Anpassung der Konfiguration der Kommunikationsbeziehungen an die technischen Gegebenheiten der Sicherheitssteuerung.

Vorteilhafterweise müssen nicht sämtliche Programmmodule eines Anwenderprogramms Steuerungskomponenten zugeordnet werden. Es ist auch denkbar, lediglich für einen Teil der Programmmodule eine Zuordnung vorzunehmen.

In einer weiteren Ausgestaltung der Erfindung sind die Konfigurationsdaten ferner in Abhängigkeit einer Anzahl von vordefinierten Steuerungsparameterwerten ermittelt.

Diese Maßnahme besitzt den Vorteil, dass der Betreiber der zu steuernden Anlage zunächst unabhängig von dem konkreten Aufbau der Sicherheitssteuerung ein für die zu realisierende Sicherheitssteuerung gefordertes Steuerungsverhalten vorgeben kann. Nach diesem geforderten Steuerungsverhalten richten sich dann die Gegebenheiten der Sicherheitssteuerung. So werden beispielsweise die in der Sicherheitssteuerung zu verbauenden Einzelkomponenten danach ausgewählt. Zudem ergeben sich daraus Vorgaben für den in der Sicherheitssteuerung zu realisierenden Datenaustausch. Somit können die Anforderungen des Betreibers mit den technischen Gegebenheiten der Steuerungskomponenten abgestimmt werden. Die Konfigurationsdaten werden in Abhängigkeit invarianter, d.h. fest vorgegebener Steuerungsparameterwerte ermittelt. Die Steuerungsparameterwerte können beispielsweise während des Erstellens des Anwenderprogramms definiert werden. Es ist aber auch denkbar, die Steuerungsparameterwerte erst danach zu definieren.

Vorteilhafterweise repräsentiert jeder der Steuerungsparameter einen eigenständigen Teilaspekt des Steuerungsverhaltens der Sicherheitssteuerung. Hierbei kann es sich um einen Teilaspekt des Gesamtsteuerungsverhaltens handeln, wobei das Gesamtsteuerungsverhalten durch die aus einer Vielzahl von Steuerungskomponenten aufgebauten gesamten Sicherheitssteuerung definiert ist. Der Teilaspekt kann aber auch das Steuerungsverhalten einer einzelnen, in der Sicherheitssteuerung enthaltenen Steuerungskomponente betreffen.

Diese Maßnahme ermöglicht vorteilhafterweise eine automatische Überprüfung, ob einzelne für die Realisierung der Sicherheitssteuerung ausgewählte Steuerungskomponenten überhaupt dazu geeignet sind, die vordefinierten Steuerungsparameterwerte zu erfüllen.

In einer weiteren Ausgestaltung der zuvor genannten Maßnahme handelt es sich bei den berücksichtigten Steuerungsparametern um zumindest einen der folgenden Steuerungsparameter: einen ersten Steuerungsparameter, der eine Reaktionszeit repräsentiert, einen zweiten Steuerungsparameter, der eine Zykluszeit repräsentiert, und einen dritten Steuerungsparameter, der eine Abtastrate repräsentiert.

Es handelt sich hierbei um die wesentlichen, das Steuerungsverhalten einer Sicherheitssteuerung charakterisierenden Steuerungsparameter. Somit ist eine vollständige Konfiguration der Kommunikationsbeziehungen möglich.

Bei der Reaktionszeit kann es sich um die Reaktionszeit der Sicherheitssteuerung insgesamt handeln. Es kann sich aber auch um die Reaktionszeit hinsichtlich einer einzelnen von der Sicherheitssteuerung realisierten Sicherheitsfunktion handeln. So ist es denkbar, dass für einzelne mit der Sicherheitssteuerung überwachte Anlagenteile unterschiedliche Reaktionszeiten vorgegeben werden können.

Bei der Zykluszeit kann es sich um eine einheitlich für die gesamte Sicherheitssteuerung vorgegebene Zykluszeit handeln. Es kann sich aber auch um eine Zykluszeit handeln, die individuell für eine Steuerungskomponente oder gar für eine in einer Steuerungskomponente enthaltene Datenverarbeitungseinheit, beispielsweise eine Datenbusschnittstelle, vorgegeben ist. Es kann sich aber auch um die Zykluszeit des Datenbusses handeln. Ebenso ist denkbar, dass sich die Zykluszeit auf eine Signalverarbeitungskette bezieht. Bei einer Signalverarbeitungskette handelt es sich um eine Folge von Steueranweisungen, wie diese beispielsweise innerhalb eines Programmmoduls vorliegen. Allgemein handelt es sich um Steueranweisungen, zwischen denen eine Verarbeitungsreihenfolge besteht.

Bei der Abtastrate handelt es sich um die Zykluszeit von in der Sicherheitssteuerung enthaltenen Ein-/Ausgabegeräten. Für die gesamte Sicherheitssteuerung kann eine einheitliche Abtastrate gelten. Die Abtastrate kann aber auch individuell vorgegeben sein, beispielsweise für einzelne Steuerungskomponenten oder für einzelne in Steuerungskomponenten enthaltene Datenverarbeitungseinheiten.

In einer weiteren Ausgestaltung der Erfindung sind die Konfigurationsdaten ferner in Abhängigkeit einer Anzahl von Datenverarbeitungskennzahlen ermittelt.

Eine Datenverarbeitungskennzahl repräsentiert eine für die Datenverarbeitung relevante Eigenschaft einer bei der Datenverarbeitung eingesetzten Komponente. Eine Datenverarbeitungskennzahl lässt somit eine Aussage über die Leistungsfähigkeit dieser Komponente bezüglich der Datenverarbeitung zu. Hierbei handelt es sich beispielsweise um die Taktfrequenz eines Mikroprozessors, um die Speicherkapazität eines Datenspeichers oder um die Datenübertragungsrate beispielsweise des Datenbusses oder einer Datenbusschnittstelle. Vorteilhafterweise beziehen sich die Datenverarbeitungskennzahlen auf die einzelnen Steuerungskomponenten und repräsentieren somit die Eigenschaften der in der jeweiligen Steuerungskomponente verbauten Datenverarbeitungseinheiten. Durch die Berücksichtigung von Datenverarbeitungskennzahlen können hardwaretechnische Gegebenheiten bei der Konfiguration der Kommunikationsbeziehungen berücksichtigt werden. Somit ist es möglich, die vom Anlagenbetreiber gemachten Vorgaben für das Steuerungsverhalten mit den hardwaretechnischen Gegebenheiten abzustimmen.

Vorzugsweise sind für die einzelnen Steuerungskomponenten die Werte der Datenverarbeitungskennzahlen in einer Datenbank hinterlegt, wobei sich die Datenbank auf demjenigen Computer befindet, mit dem das Computerprogramm für das Erstellen des Anwenderprogramms ausgeführt wird. Alternativ können diese Werte auch in den einzelnen Steuerungskomponenten hinterlegt sein und werden dann ausgelesen.

In einer weiteren Ausgestaltung der Erfindung sind die Zuordnungsdaten, insbesondere die Programmmodulzuordnungsdaten in Abhängigkeit der Anzahl von Datenverarbeitungskennzahlen ermittelt.

Die Maßnahme, die Zuordnungsdaten in Abhängigkeit von Datenverarbeitungskennzahlen zu ermitteln, hat den Vorteil, dass Teilumfänge des Anwenderprogramms unter dem Gesichtspunkt einer optimierten Datenverarbeitung einzelnen Steuerungskomponenten zugeordnet werden können. So können Teilumfänge des Anwenderprogramms, zu deren Verarbeitung eine hohe Rechenleistung erforderlich ist, beispielsweise in Steuerungskomponenten verarbeitet werden, die mit einem leistungsfähigen Mikroprozessor ausgestattet sind. Dies ermöglicht eine besonders optimierte Konfiguration der Kommunikationsbeziehungen.

Bei der Maßnahme, gemäß der die Programmmodulzuordnungsdaten in Abhängigkeit der Datenverarbeitungskennzahlen ermittelt sind, ist folgende vorteilhafte Vorgehensweise denkbar: Zunächst kann der Programmierer des Anwenderprogramms die Programmmodulzuordnungen im Sinne einer Verarbeitung vor Ort vorgeben. Anschließend kann durch eine Berücksichtigung von Datenverarbeitungskennzahlen überprüft werden, ob die jeweiligen Steuerungskomponenten für das Verarbeiten der jeweiligen Programmmodule leistungsfähig genug sind. Gegebenenfalls kann ein Hinweis an den Programmierer erfolgen, eine Änderung in der Programmmodulzuordnung vorzunehmen. Es ist aber auch denkbar, eine automatische Optimierung der Programmmodulzuordnungen durch das Computerprogramm, mit dem das Anwenderprogramm erstellt wird, zuzulassen.

In einer weiteren Ausgestaltung der Erfindung weist zumindest ein Teil der Steuerungskomponenten jeweils einen Datenspeicher auf, wobei die Datenspeicher jeweils dazu ausgebildet sind, ihnen jeweils zugeführte Daten zu speichern, wobei die Sicherheitssteuerung ferner eine Verteileinheit aufweist, wobei die Verteileinheit dazu ausgebildet ist, zumindest einen Teil der Konfigurationsdaten über den Datenbus auf zumindest einen Teil der Steuerungskomponenten zu verteilen.

Diese Maßnahme besitzt den Vorteil, dass Konfigurationsdaten gezielt in einzelnen Datenspeichern abgespeichert werden können. Dies ermöglicht beispielsweise, Konfigurationsdaten in sog. intelligenten Ein-/Ausgabe-Einheiten abzuspeichern. Hierbei handelt es sich insbesondere um sicherheitsrelevante Sensoren und Aktuatoren, die über Datenverarbeitungseinheiten, beispielsweise Mikroprozessoren und Datenspeicher, verfügen. Dadurch können in einer Sicherheitssteuerung vorhandene Datenspeicher, die ansonsten zu einem Großteil ungenutzt bleiben würden, mit Konfigurationsdaten belegt und somit genutzt werden. Dadurch können in einer Sicherheitssteuerung vorhandene Steuereinheiten zukünftig mit kleineren Datenspeichern ausgestattet und somit die Kosten für eine Sicherheitssteuerung reduziert werden. Gleichzeitig ermöglicht diese Maßnahme die Realisierung kurzer Reaktionszeiten. Konfigurationsdaten können dort abgespeichert werden, wo sie zu verarbeiten sind. Dies reduziert den Datenaustausch zwischen den Steuerungskomponenten.

Vorzugsweise werden die Konfigurationsdaten in Abhängigkeit der Zuordnungsdaten, insbesondere der Programmmodulzuordnungsdaten auf die einzelnen Steuerungskomponenten verteilt. Des Weiteren ist es von Vorteil, wenn zumindest ein Teil der Datenspeicher dazu ausgebildet ist, die jeweils zugeführten Konfigurationsdaten nullspannungssicher zu speichern. Diese Maßnahme hat den Vorteil, dass die Konfigurationsdaten beispielsweise nach einem Spannungsausfall oder nach Abschalten der Sicherheitssteuerung nach wie vor vorliegen. Dadurch wird die Verfügbarkeit der Sicherheitssteuerung erhöht. Es ist keine Neuinitialisierung der Sicherheitssteuerung erforderlich. Beispielsweise werden hierfür Speicherkarten in Form von SD-Cards oder CF-Cards verwendet oder aber Flash-Speicher eingesetzt.

In einer weiteren Ausgestaltung der zuvor genannten Maßnahme ist zumindest ein Teil der Konfigurationsdaten redundant in den Datenspeichern gespeichert.

Das redundante Abspeichern der Konfigurationsdaten wird dadurch erreicht, dass die jeweiligen Konfigurationsdaten gedoppelt werden. Die gedoppelten Konfigurationsdaten werden dann eigenständig auf die Datenspeicher verteilt, und zwar unter der Maßgabe, dass die ursprünglichen Konfigurationsdaten und die gedoppelten Konfigurationsdaten jeweils in einem anderen Datenspeicher gespeichert sind. Durch diese Maßnahme wird die Verfügbarkeit der Sicherheitssteuerung und somit der gesteuerten Anlage erhöht. Fällt beispielsweise eine nicht-sicherheitsrelevante Steuerungskomponente aus, so stehen nach wie vor die Konfigurationsdaten, die in ihrem Datenspeicher gespeichert waren, zur Verfügung, da diese noch in einem anderen Datenspeicher gespeichert sind.

Vorteilhafterweise werden nicht nur die Konfigurationsdaten, sondern auch Programmdaten und/oder Parametrisierungsdaten auf die einzelnen Steuerungskomponenten verteilt. Die Programmdaten repräsentieren dabei das Anwenderprogramm und werden beim Erstellen des Anwenderprogramms erzeugt. Besonders bei den Programmdaten ist es von Vorteil, diese dort abspeichern zu können, wo beispielsweise benötigte Sensorsignale vorliegen oder Ansteuersignale für Aktuatoren bereitzustellen sind. Die Parametrisierungsdaten repräsentieren Wertebereiche für einzelne im Anwenderprogramm verwendete Variablen oder Funktionalitäten. Die Konfigurationsdaten, die Programmdaten und die Parametrisierungsdaten werden zusammengefasst als Projektdaten bezeichnet, die eine auf der Anlage ablaufende Anwendung repräsentieren. Sowohl für die Programmdaten als auch für die Parametrisierungsdaten gelten die vorstehenden Ausführungen hinsichtlich Zuordnung, Abspeicherung und Ausgestaltung der Datenspeicher entsprechend.

In einer weiteren Ausgestaltung der Erfindung handelt es sich bei der Verteileinheit um einen der Datenspeicher.

Diese Maßnahme besitzt den Vorteil, dass für das Verteilen der Konfigurationsdaten keine zusätzliche Einheit in der Sicherheitssteuerung vorzusehen ist. Das Verteilen der Konfigurationsdaten wird von einem der ohnehin in der Sicherheitssteuerung vorhandenen Datenspeicher durchgeführt. Dies ermöglicht eine kostengünstige Realisierung der Sicherheitssteuerung. Vorteilhafterweise ist hierfür zumindest einer der Datenspeicher dazu ausgebildet, zugeführte Konfigurationsdaten an zumindest einen anderen Datenspeicher weiterzuleiten oder in einem anderen Datenspeicher gespeicherte Konfigurationsdaten anzufordern. Dies ermöglicht ein flexibles Verteilen der Konfigurationsdaten auf die einzelnen Datenspeicher. Dadurch ist es sogar möglich, die Konfigurationsdaten beliebig auf die Datenspeicher zu verteilen.

Alternativ kann eine externe Verteileinheit verwendet werden, die zumindest zeitweise an eine in der Sicherheitssteuerung hierfür vorgesehene Schnittstelle angeschlossen ist. Besonders vorteilhaft ist es, wenn sich die externe Verteileinheit in demjenigen Computer befindet, mit dem das Anwenderprogramm erstellt wird. Dadurch können die Konfigurationsdaten direkt von dem Computer auf die Sicherheitssteuerung übertragen werden.

In einer weiteren Ausgestaltung der Erfindung sind die Konfigurationsdaten in eine Vielzahl von Datenblöcke aufgeteilt, wobei zumindest ein Datenblock dem Datenbus zugeordnet ist und die restlichen Datenblöcke jeweils zumindest einer der Datenbusschnittstellen zugeordnet sind.

Diese Maßnahme hat den Vorteil, dass die Konfigurationsdaten entsprechend einem Verteilkriterium gezielt dem Datenbus und den Datenbusschnittstellen zugewiesen werden können. Die Konfigurationsdaten können vor Ort verarbeitet werden., wodurch unter anderem kurze Reaktionszeiten ermöglicht werden.

Was die Anordnung eines für den Betrieb des Datenbus benötigten Datenbusmanagers angeht, so sind mehrere Ausgestaltungen denkbar. Der Datenbusmanager kann in einer der Steuerungskomponenten enthalten sein. In diesem Fall wird der dem Datenbus zugeordnete Datenblock in dem Datenspeicher dieser Steuerungskomponente abgespeichert. In einer anderen Ausgestaltung kann der Datenbusmanager eigenständig ausgeführt sein und ist somit nicht in einer der Steuerungskomponenten enthalten. Der dem Datenbus zugeordnete Datenblock wird dann vorzugsweise in einem Datenspeicher abgespeichert, der in dem Datenbusmanager enthalten ist.

In einer weiteren Ausgestaltung der Erfindung handelt es sich bei den Konfigurationsdaten um folgende Daten:
- Gültigkeitszeitdaten, die eine Gültigkeitszeitdauer repräsentieren, während der erzeugte Daten gültig sind, und/oder
- Wartezeitdaten, die eine Wartezeitdauer repräsentieren, während der eine Daten konsumierende Steueranweisung auf von ihr zu konsumierende Daten wartet, und/oder
- Synchronisationsdaten, in deren Abhängigkeit die Steuerungskomponenten synchronisierbar sind, und/oder
- Datenrahmenzuweisungsdaten, die eine Anzahl von Datenrahmenzuweisungen repräsentieren, wobei die Datenrahmenzuweisungen für zumindest eine der Steuerungskomponenten diejenigen Datenfelder innerhalb eines für den Datenbus spezifizierten Datenrahmens definieren, die der Steuerungskomponente für die von ihr zu sendenden Daten und für die von ihr zu empfangenden Daten zugewiesen sind.

Die Gültigkeitszeitdaten betreffen Daten erzeugende Steueranweisungen. Vorzugsweise wird für jede Daten erzeugende Steueranweisung individuell eine Gültigkeitszeitdauer definiert. Es ist aber auch denkbar, für eine Vielzahl von Daten erzeugenden Steueranweisungen, die beispielsweise über Verarbeitungszuordnungen zusammenhängen, eine gemeinsame Gültigkeitszeitdauer vorzugeben.

Die Wartezeitdaten betreffen Daten konsumierende Steueranweisungen. Auch hier wird vorzugsweise für jede Daten konsumierende Steueranweisung eine individuelle Wartezeitdauer definiert. Entsprechend den Ausführungen zu den Gültigkeitszeitdaten kann auch für eine Vielzahl von Daten konsumierenden Steueranweisungen eine gemeinsame Wartezeitdauer vorgegeben werden. Die Wartezeitdauer kann in einer alternativen Betrachtungsweise auch so aufgefasst werden, dass es sich um diejenige Zeitdauer handelt, innerhalb der eine Daten erzeugende Steueranweisung Daten bereitzustellen hat, die von einer anderen Steueranweisung verarbeitet bzw. konsumiert werden.

Vorzugsweise werden mit den Synchronisationsdaten die einzelnen Uhren und/oder die einzelnen Timer Interrupt Requests der Steuerungskomponenten synchronisiert. Weiterhin vorzugsweise kann durch die Synchronisationsdaten auch die Arbeitsweise des Datenbusses beeinflusst werden.

Die Datenrahmenzuweisungsdaten ermöglichen den Einsatz eines ethemetbasierten Feldbusses, insbesondere eines Datenbussystems, welches nach dem auf die Anmelderin zurückgehenden SafetyNet p ® -Kommunikationsmodell arbeitet. Bei solch einem Datenbussystem erzeugt eine erste an den Datenbus angeschlossene Steuerungskomponente einen Datenrahmen mit einer Vielzahl von Datenfeldern. Jeder weiteren Steuerungskomponente ist zumindest ein Datenfeld zum Belegen mit Sendedaten eindeutig zugewiesen. Der Datenrahmen wird als hinlaufender Datenrahmen von einer Steuerungskomponente zur nächsten gesendet, wobei jede Steuerungskomponente ein ihr zugewiesenes Datenfeld mit Sendedaten belegt. Die letzte Steuerungskomponente sendet den Datenrahmen als zurücklaufenden Datenrahmen an die Reihe der Steuerungskomponenten zurück. Dabei lesen die Steuerungskomponenten fremde Sendedaten aus den Datenfeldern des zurücklaufenden Datenrahmens aus, wobei die jeweiligen Datenfelder den Steuerungskomponenten individuell zugewiesen sind.

Des Weiteren kann es sich bei den Konfigurationsdaten um Festlegungsdaten handeln, die für die einzelnen Steuerungskomponenten die jeweils zu verarbeitenden Daten nach ihrem Datentyp definieren. Wird ein Datenbussystem eingesetzt, bei dem Daten mit unterschiedlichen Datenbuszykluszeiten übertragen werden können, wie dies bei dem vorgenannten nach dem SafetyNet p ® - Kommunikationsmodell arbeitenden Datenbussystem der Fall ist, so kann es sich bei den Konfigurationsdaten auch um Datenbuszyklusdaten handeln, die für einzelne oder eine Vielzahl von Steueranweisungen festlegen, mit welcher Datenbuszykluszeit deren Daten zu übertragen sind.

Mit den vorstehend aufgeführten Konfigurationsdaten ist eine umfassende Konfiguration der Kommunikationsbeziehungen möglich.

Mit der neuen Sicherheitssteuerung und dem neuen Verfahren können die Kommunikationsbeziehungen umfassend automatisch konfiguriert werden. Dies beinhaltet eine Konfiguration der Eingangsabbilder und der Ausgangsabbilder der einzelnen Steuerungskomponenten, eine Zuordnung zwischen den einzelnen Eingangsabbildern und den einzelnen Ausgangsabbildern, sowie das Ermitteln der Konfigurationsdaten für die Steuerungskomponenten, insbesondere den jeweils enthaltenen Datenbusschnittstellen, und den Datenbus.

Vorteilhafterweise ermöglicht eine Datenbusschnittstelle nicht nur den Datenaustausch zwischen dem Datenbus und derjenigen Steuerungskomponente, in der sie enthalten ist, sondern sie ist auch für die Organisation des Datenaustauschs innerhalb der Steuerungskomponente zuständig.

Die auf der zu steuernden Anlage ablaufende Anwendung kann auch als Prozess bezeichnet werden, der sowohl Standardsteuerungsaufgaben als auch Sicherheitssteuerungsaufgaben umfasst.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer zu steuernden Anlage;
- Fig. 2: eine schematische Darstellung von an einer Anlagenkomponente angeordneten Steuerungskomponenten;
- Fig. 3: eine vereinfachte Darstellung einer verteilten Sicherheitssteuerung;
- Fig. 4: eine vereinfachte Darstellung einer grafischen Oberfläche für das Erstellen eines Anwenderprogramms;
- Fig. 5: ein Zeitdiagramm zur Erläuterung von Verarbeitungszuordnungen und daraus sich ergebender Konfigurationsdaten;
- Fig. 6: eine vereinfachte Darstellung einer Sicherheitssteuerung und ein zugehöriger Abhängigkeitsgraph zur Erläuterung von Verarbeitungszuordnungen; und
- Fig. 7: ein vereinfachtes Flussdiagramm zur Erläuterung des neuen Verfahrens.

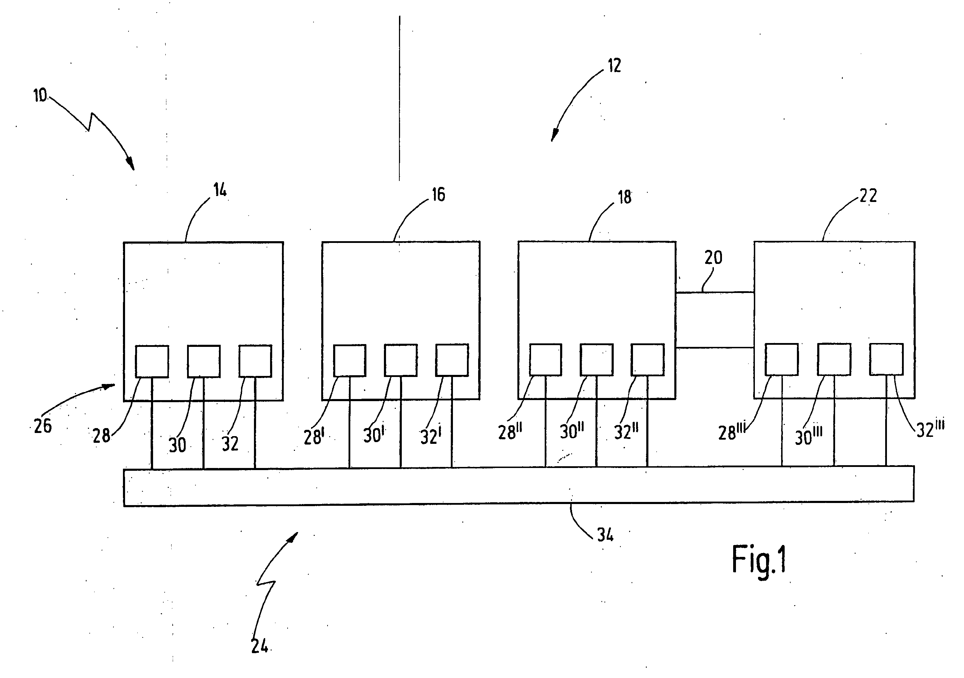

In Fig. 1 ist eine zu steuernde Anlage in ihrer Gesamtheit mit der Bezugsziffer 10 bezeichnet.

Die Anlage 10 beinhaltet eine Vielzahl von Anlagenkomponenten 12. Im vorliegenden Ausführungsbeispiel handelt es sich um eine Bestückungsstation 14, eine Bearbeitungsstation 16, eine Teststation 18, eine Fördereinheit 20 und eine Verpackungs- und Palettierstation 22. Des Weiteren ist eine Sicherheitssteuerung in ihrer Gesamtheit mit der Bezugsziffer 24 bezeichnet. Die Sicherheitssteuerung 24 beinhaltet eine Vielzahl von Steuerungskomponenten 26. Bei den Steuerungskomponenten 26 handelt es sich um Steuereinheiten 28, Sensoreinheiten mit angeschlossenen Sensoren 30 und Aktoreinheiten mit angeschlossenen Aktuatoren 32. Dabei sind die einzelnen Steuereinheiten 28, Sensoren 30 und Aktuatoren 32 jeweils einer Anlagenkomponente 12 funktional zugeordnet und häufig auch räumlich dort angeordnet. Die Steuerungskomponenten 12 sind über einen Datenbus 34 untereinander vernetzt. Dementsprechend besitzen die Steuerungskomponenten 26 Datenbusschnittstellen (hier nicht dargestellt). Bevorzugt handelt es sich um einen auf dem Ethernet-Standard basierenden Datenbus, der insbesondere nach dem auf die Anmelderin zurückgehenden SafetyNet p ® - Kommunikationsmodell arbeitet. Die Steuerungskomponenten 26 kommunizieren bei SafetyNet p ® nach dem so genannten Producer-Consumer-Prinzip, d.h. jede an der Kommunikation teilnehmende Steuerungskomponente sendet Daten "ungerichtet" an die Allgemeinheit der anderen Steuerungskomponenten, und jede Steuerungskomponente liest Daten anderer Steuerungskomponenten aus dem "Pool" der zur Verfügung gestellten Daten. Vorzugsweise erzeugt eine ausgewählte Steuerungskomponente, insbesondere ein so genannter Datenbusmanager, zyklisch wiederkehrend einen der Reihe nach durch alle anderen Steuerungskomponenten hindurchlaufenden Datenrahmen mit einer Vielzahl von Datenfeldern. Jede Steuerungskomponente legt ihre Sendedaten in vordefinierte Datenfelder des umlaufenden Datenrahmens und liest fremde Sendedaten aus anderen vordefinierten Datenfeldern. Dieses Kommunikationsmodell ist in DE 10 2004 063 213 A1 beschrieben und hier durch Bezugnahme aufgenommen.

Mit der Bestückungsstation 14 wird die Bearbeitungsstation 16 mit Werkstücken befüllt. Diese Werkstücke (hier nicht dargstellt) werden in der Bearbeitungsstation 16 bearbeitet. Anschließend werden die bearbeiteten Werkstücke von der Bearbeitungsstation 16 an die Teststation 18 weitergegeben, in der überprüft wird, ob das bearbeitete Werkstück vordefinierte Prüfkriterien erfüllt. Sind diese Prüfkriterien erfüllt, kann die Bearbeitungsstation 16 wieder mit einem neuen Werkstück befüllt werden. Das bearbeitete Werkstück wird mittels der Fördereinheit 20 an die Verpackungs- und Palettierstation 22 übergeben. In dieser werden mehrere bearbeitete Werkstücke zu Gebinden zusammengefasst, die dann auf einer Palette gestapelt werden.

Die Arbeitsbereiche der einzelnen Stationen 14, 16, 18, 22 können beispielsweise durch Schutztüren gesichert sein, die mit Schutztürschaltem überwacht sind. Alternativ oder ergänzend können Lichtgitter oder Lichtvorhänge eingesetzt werden. Darüber hinaus können die einzelnen Stationen 14, 16, 18, 22 mit Not-Aus-Tastem versehen sein, mit denen die jeweilige Station in einen sicheren Zustand überführt werden kann. Hierfür werden in der jeweiligen Stromversorgung angeordnete Schütze entsprechend angesteuert. Bei den vorstehend genannten Schutztürschaltern, Lichtgittem, Lichtvorhängen und Not-Aus-Tastern handelt es sich um sicherheitsrelevante Sensoren 30. Bei den Schützen handelt es sich um sicherheitsrelevante Aktuatoren 32. Die Sensoren 30 können des Weiteren nicht-sicherheitsrelevante Sensoren umfassen, wie etwa einen Sensor zur Anzeige des Werkzeugverschleisses oder eine nicht-sichere Positionsanzeige.

Im vorliegenden Ausführungsbeispiel ist jeder Station 14, 16, 18, 22 eine Steuereinheit 28 zugeordnet. Dementsprechend sind die Steuereinheiten 28 hier als baulich eigenständige Komponenten ausgebildet. Dies gilt ebenso für die Sensoreinheiten 30 und die Aktuatoreinheiten 32. Es ist aber auch denkbar, beispielsweise zwei Stationen eine gemeinsame Steuereinheit zuzuordnen.

In Fig. 1 sind funktionsgleiche Komponenten mit derselben Bezugsziffer versehen, wobei durch die Verwendung von Strichen angedeutet ist, dass die einzelnen Komponenten derselben Bezugsziffer aufgrund der individuellen Zuordnung zu einzelnen Anlagenkomponenten 12 durchaus unterschiedlich ausgestaltet sein können. Entsprechendes gilt auch für Signale. Diese Form der Kennzeichnung gilt auch für die nachfolgenden Figuren.

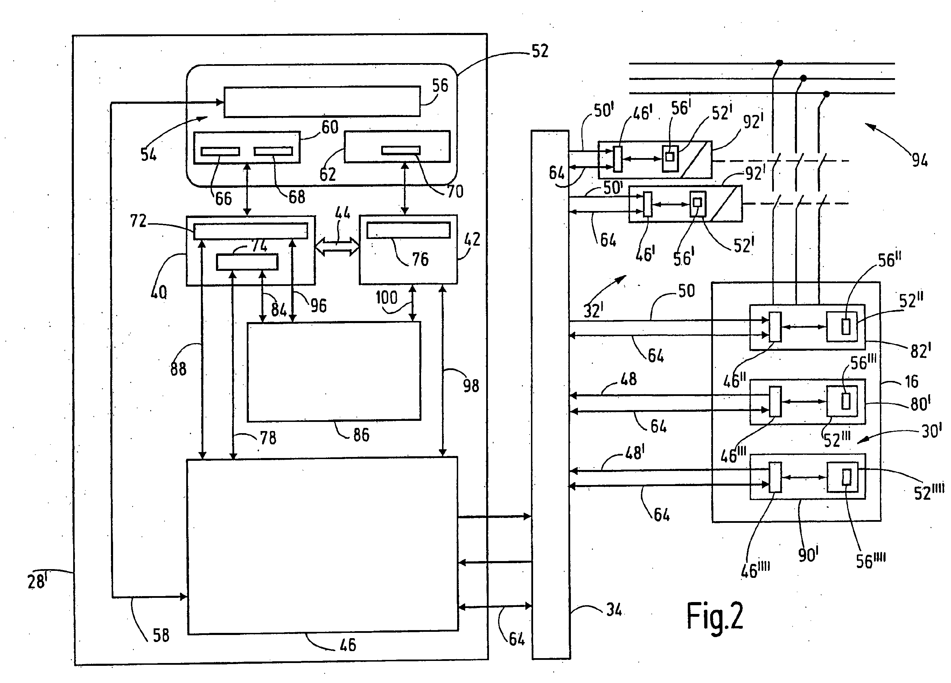

In Fig. 2 sind die Bearbeitungsstation 16 und die ihr zugeordneten Steuerungskomponenten mit weiteren Details gezeigt. Die Steuereinheit 28' ist hier zweikanaligredundant aufgebaut, um die erforderliche Fehlersicherheit zum Steuern sicherheitskritischer Anwendungen bzw. Prozesse zu erreichen. Stellvertretend für den zweikanaligen Aufbau sind zwei getrennte Prozessoren, nämlich ein erster Prozessor 40 und ein zweiter Prozessor 42, dargestellt. Die beiden Prozessoren 40, 42 stehen über eine bidirektionale Kommunikationsschnittstelle 44 miteinander in Verbindung, um sich gegenseitig überwachen und Daten austauschen zu können. Bevorzugt sind die beiden Kanäle der Steuereinheit 28' und die beiden Prozessoren 40, 42 diversitär, d.h. verschieden voneinander, aufgebaut, um systematische Fehler weitgehend auszuschließen.

Mit der Bezugsziffer 46 ist eine Datenbusschnittstelle bezeichnet, die mit jedem der beiden Prozessoren 40, 42 in Verbindung steht. Die Datenbusschnittstelle 46 nimmt Steuerungseingangssignale 48, 48' mit Eingangsdaten von den Sensoren 30' auf und leitet diese in einem angepassten Datenformat an jeden der beiden Prozessoren 40, 42 weiter. Ferner erzeugt die Datenbusschnittstelle 46 in Abhängigkeit von den Prozessoren 40, 42 Steuerungsausgangssignale 50, 50' mit Ausgangsdaten, mit denen die Aktuatoren 32' angesteuert werden.

Mit der Bezugsziffer 52 ist ein Datenspeicher bezeichnet, in dem Projektdaten 54 in Form von Datenblöcken gespeichert sind. Hier handelt es sich um einen ersten Datenblock 56, welcher Konfigurationsdaten 58 für die Datenbusschnittstelle 46 enthält. Darüber hinaus enthält der Datenspeicher 52 einen zweiten Block 60 und einen dritten Block 62. Die beiden Blöcke 60, 62 enthalten Programmbefehle, die eine Anwenderprogramm repräsentieren, der in der Steuereinheit 28' abgearbeitet wird. Der Datenspeicher 52 ist so ausgebildet, dass die insgesamt gespeicherten Projektdaten 54 nullspannungssicher gespeichert sind. Hierzu ist der Datenspeicher 52 beispielsweise als Flashspeicher, als SD-Card oder als CF-Card ausgeführt. Aus Gründen der Übersichtlichkeit wurde auf die Darstellung von eventuell in den Projektdaten 54 enthaltenen Parametrisierungsdaten verzichtet.

Die Aktuatoren 32' und die Sensoren 30' besitzen ebenfalls Datenbusschnittstellen 46', 46", 46"', 46"". Darüber hinaus verfügen die Aktuatoren 32' und die Sensoren 30' über Datenspeicher 52', 52", 52"', 52"" zum Speichern von Datenblöcken 56', 56", 56"', 56"", die Konfigurationsdaten der jeweiligen Datenbusschnittstelle 46', 46", 46"', 46"" enthalten. Dies soll keine einschränkende Wirkung haben. Es müssen nicht alle Steuerungskomponenten Datenspeicher aufweisen. Die Konfigurationsdaten derjenigen Steuerungskomponenten, die über keinen Datenspeicher verfügen, können auch in einem Datenspeicher einer anderen Steuerungskomponente gespeichert sein. Ein hierfür gegebenenfalls erforderlicher Austausch von Konfigurationsdaten ist durch Pfeile 64 angedeutet.

Die Datenbusschnittstelle 46 stellt sicher, dass ein Datenaustausch zwischen der Steuereinheit 28' und dem Datenbus 34 gemäß einem Kommunikationsprotokoll des Datenbusses 34 erfolgt. Die Datenbusschnittselle 46 erzeugt in den bevorzugten Ausführungsbeispielen ethernetkompatible Bustelegramme, in die Datenrahmen mit den zwischen einzelnen Steuerungskomponenten auszutauschenden Daten eingebettet sind. Die Datenbusschnittstelle 46 kann weitere Funktionseinheiten enthalten, die in Fig. 2 jedoch aus Gründen der Übersichtlichkeit nicht dargestellt sind. Hierbei kann es sich um einen Eventbroker handeln, mit dem ereignisbasiert Daten ausgetauscht werden können. Es kann sich auch um einen Databroker handeln, mit dem ein datenbasierter Datenaustausch erfolgen kann. Der in Fig. 2 dargestellte Datenbus 34 kann ein Kommunikationsmedium, einen oder mehrere Switches und einen Datenbusmanager beinhalten.

Die Projektdaten 54 liegen in binärer Form, d.h. als Maschinencode vor. Für ein fehlersicheres Arbeiten der Steuereinheit 28' sind im Datenspeicher 52 zwei Datenblöcke 60, 62 mit Programmdaten abgespeichert. Der zweite Datenblock 60 ist für den ersten Prozessor 40 und der dritte Datenblock 62 für den zweiten Prozessor 42 bestimmt. Der zweite Datenblock 60 umfasst einen ersten Sicherheitscode 66 und einen Standardcode 68. Der erste Sicherheitscode 66 umfasst diejenigen Steueranweisungen, die vom ersten Prozessor 40 im Rahmen der von der Steuereinheit 28' zu erledigenden Sicherheitsaufgaben abzuarbeiten sind. Diese Art von Steueranweisungen werden nachfolgend als Sicherheitssteueranweisungen bezeichnet. Der Standardcode 68 umfasst diejenigen Steueranweisungen, die von dem ersten Prozessor 40 im Rahmen der von der Steuereinheit 28' zu erledigenden Standardaufgaben abzuarbeiten sind. Diese Art von Steueranweisungen werden nachfolgend als Standardsteueranweisungen bezeichnet. Der dritte Datenblock 62 umfasst einen zweiten Sicherheitscode 70, der diejenigen Steueranweisungen umfasst, die vom zweiten Prozessor 42 abzuarbeiten sind. Diese Steueranweisungen werden nachfolgend ebenfalls als Sicherheitssteueranweisungen bezeichnet.

In Abhängigkeit des Bearbeitungsfortganges wird in dem ersten Prozessor 40 eine erste aktuelle Sicherheitssteueranweisung 72 und eine aktuelle Standardsteueranweisung 74 abgearbeitet. Im Wesentlichen zeitgleich wird in dem zweiten Prozessor 42 eine zweite aktuelle Sicherheitssteueranweisung 76 abgearbeitet.

Im Rahmen der Bearbeitung der aktuellen Standardsteueranweisung 74, bei der es sich um eine nicht-sicherheitsrelevante Steueranweisung handelt, werden erste nicht-sicherheitsrelevante Daten 78 zwischen dem ersten Prozessor 40 und der Datenbusschnittstelle 46 ausgetauscht. Beispielsweise werden dem ersten Prozessor 40 Momentanwerte von nicht-sicherheitsrelevanten Steuerungseingangssignalen 48 zugeführt, die von nicht-sicherheitsrelevanten Sensoren 80' erzeugt werden. Bei den nicht-sicherheitsrelevanten Sensoren 80' handelt es sich um solche Sensoren, die beispielsweise für eine Antriebsregelung benötigte Eingangsgrößen erfassen. Die nicht-sicherheitsrelevanten Sensoren 80' sind nicht-fehlersicher ausgebildet. Der Datenbusschnittstelle 46 werden Momentanwerte von nicht-sicherheitsrelevanten Steuerungsausgangssignalen 50 zugeführt, die nicht-sicherheitsrelevanten Aktuatoren 82' zu deren Ansteuerung zugeführt werden. Die Momentanwerte der nicht-sicherheitsrelevanten Steuerungsausgangssignale 50 werden in Abhängigkeit der nicht-sicherheitsrelevanten Steuerungseingangssignale 48 gemäß den Standardsteueranweisungen ermittelt. Hierbei kann es erforderlich sein, Zwischengrößen zu ermitteln, deren Momentanwerte mittels zweiter nicht-sicherheitsrelevanter Daten 84 einem Arbeitsspeicher 86 zugeführt und dort zwischengespeichert werden.

Im Rahmen der Bearbeitung der ersten aktuellen Sicherheitssteueranweisung 72, bei der es sich um eine sicherheitsrelevante Steueranweisung handelt, werden erste sicherheitsrelevante Daten 88 zwischen dem ersten Prozessor 40 und der Datenbusschnittstelle 46 ausgetauscht. Hierbei werden dem ersten Prozessor 40 Momentanwerte von sicherheitsrelevanten Steuerungseingangssignalen 48' zugeführt, die von sicherheitsrelevanten Sensoren 90' erzeugt werden. Bei den sicherheitsrelevanten Sensoren 90' handelt es sich beispielsweise um Not-Aus-Taster, Schutztüren, Drehzahlüberwachungsgeräte oder andere Sensoren zur Aufnahme sicherheitsrelevanter Parameter. Der Datenbusschnittstelle 46 werden Momentanwerte von sicherheitsrelevanten Steuerungsausgangssignalen 50' zugeführt, die sicherheitsrelevanten Aktuatoren 92' zu deren Ansteuerung zugeführt werden. Bei den sicherheitsrelevanten Aktuatoren 92' handelt es sich beispielsweise um Schütze, deren Arbeitskontakte in der Verbindung zwischen einer Stromversorgung 94 und der Bearbeitungsstation 16 angeordnet sind. Somit kann die Stromversorgung 94 der Bearbeitungsstation 16 abgeschaltet werden, wodurch es möglich ist, bei Auftritt einer entsprechenden Fehlfunktion zumindest die Bearbeitungsstation 16 in einen sicheren Zustand zu überführen. Die Momentanwerte der sicherheitsrelevanten Steuerungsausgangssignale 50' werden in Abhängigkeit der sicherheitsrelevanten Steuerungseingangssignale 48' gemäß den Sicherheitssteueranweisungen ermittelt. Hierbei kann es erforderlich sein, sicherheitsrelevante Zwischengrößen zu ermitteln, deren Momentanwerte mittels zweiter sicherheitsrelevanter Daten 96 dem Arbeitsspeicher 86 zugeführt und dort zwischengespeichert werden.

Im Rahmen der Bearbeitung der zweiten aktuellen Sicherheitssteueranweisung 76, bei der es sich um eine sicherheitsrelevante Steueranweisung handelt, wird entsprechend der ersten aktuellen Sicherheitssteueranweisung 72 verfahren. Bezüglich der zweiten aktuellen Sicherheitssteueranweisung 76 werden dritte sicherheitsrelevante Daten 98, die den ersten sicherheitsrelevanten Daten 88 entsprechen, und vierte sicherheitsrelevante Daten 100, die den zweiten sicherheitsrelevanten Daten 96 entsprechen, in entsprechender Weise verwendet.

Werden im weiteren Verlauf die Formulierungen "Daten erzeugende Steueranweisungen" oder "Daten konsumierende Steueranweisungen" verwendet, so kann es sich in beiden Fällen sowohl um Sicherheitssteueranweisungen als auch um Standardsteueranweisungen handeln.

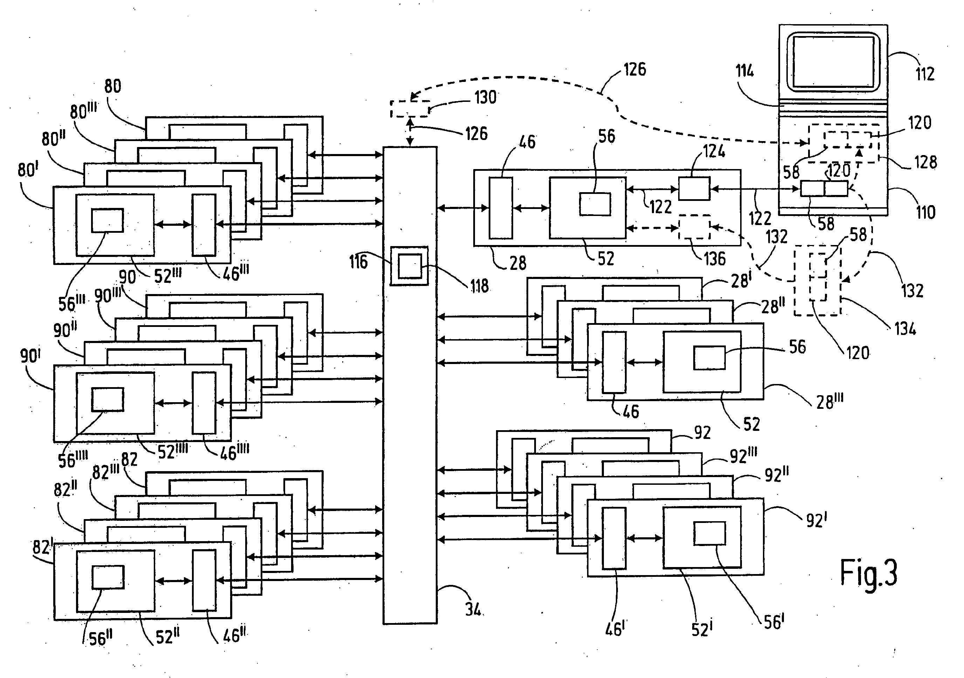

In Fig. 3 sind entsprechend dem Aufbau der in Fig. 1 dargestellten Anlage 10 die Steuereinheiten 28, 28', 28", 28"', nicht-sicherheitsrelevante Sensoren 80, 80', 80", 80"', nicht-sicherheitsrelevante Aktuatoren 82, 82', 82", 82"', sicherheitsrelevante Sensoren 90, 90', 90", 90"' und sicherheitsrelevante Aktuatoren 92, 92', 92", 92'" mitsamt den in ihnen enthalten Datenbusschnittstellen 46, 46', 46", 46"', 46"", Datenspeichern 52, 52', 52", 52"', 52"" und den die Konfigurationsdaten enthaltenden ersten Datenblöcken 56, 56', 56", 56"', 56"" dargestellt. Aus Gründen der Übersichtlichkeit sind vorwiegend die in der obersten Zeichenebene dargestellten Komponenten mit Bezugsziffern versehen. Die einzelnen Steuerungskomponenten sind untereinander über den Datenbus 34 verbunden.

In Fig. 3 ist ein Computer mit der Bezugsziffer 110 bezeichnet. Der Computer 110 ist mit einer Anzeigeeinheit 112 verbunden. Auf dem Computer 110 wird ein Computerprogramm 114 ausgeführt. Das Computerprogramm 114 ermöglicht das Erstellen von Projektdaten, die eine auf der zu steuernden Anlage 10 ablaufende Anwendung repräsentieren. Die Projektdaten umfassen dabei Programmdaten, Konfigurationsdaten 58 und Parametrisierungsdaten. Das Computerprogramm 114 wird in der Fachterminologie häufig als Programmiertool bezeichnet.

Die mit dem Computer 110 erzeugten Konfigurationsdaten 58 werden hier auf die Datenspeicher 52, 52', 52", 52"', 52"" und einen Datenbusmanager 116 übertragen. Der Datenbusmanager 116 ist hier bevorzugt eine Steuerungskomponente, die die den regelmäßig umlaufenden Datenrahmen für die Kommunikation aller verbundenen Steuerungskomponenten erzeugt. Die Konfigurationsdaten für den Datenbusmanager 116 können die Zykluszeit der Datenübertragung, d.h. welche Zeitspanne zwischen zwei aufeinander folgenden Datenrahmen vergehen darf, die Länge der Datenrahmen, die Anzahl der Datenfelder und/oder Time-out Parameter enthalten.

Hier sind die Konfigurationsdaten 58 in eine Vielzahl von ersten Datenblöcken 56, 56', 56", 56"', 56"" und einen vierten Datenblock 118 aufgeteilt. Die ersten Datenblöcke 56, 56', 56", 56"', 56"" sind jeweils einem der Datenspeicher 52, 52', 52", 52"', 52"" zugeordnet. Der vierte Datenblock 118 ist dem Datenbusmanager 116 zugeordnet. Die Konfigurationsdaten 58 werden hier in Abhängigkeit von Zuordnungsdaten 120 auf die einzelnen Datenspeicher 52, 52', 52", 52"', S2"" und den Datenbusmanager 116 verteilt. Somit sind sowohl dem Datenbus 34 als auch den Datenbusschnittstellen 46, 46', 46", 46"', 46"" jeweils Konfigurationsdaten 58 zugeordnet. Folglich kann sowohl zumindest eine Eigenschaft des Datenbusses 34 als auch zumindest eine Eigenschaft einer Datenbusschnittstelle durch die Konfigurationsdaten 58 festgelegt werden.

Die Zuordnungsdaten 120 werden in dem Computer 110 erzeugt. Die Zuordnungsdaten 120 umfassen unter anderem Programmmodulzuordnungsdaten. Die Programmmodulzuordnungsdaten werden für das Verteilen der Konfigurationsdaten 58 auf die einzelnen Datenbusschnittstellen 46, 46', 46", 46"', 46"" und somit Datenspeicher 52, 52', 52", 52"', 52"" und den Datenbusmanager 116 verwendet. Vorzugsweise werden von dem Computer 110 nicht die kompletten Zuordnungsdaten, sondern lediglich die Programmmodulzuordnungsdaten für das Verteilen der Konfigurationsdaten 58 bereitgestellt

Um die Konfigurationsdaten 58 verteilen zu können, werden diese einer Verteileinheit zugeführt. Es sind hier drei unterschiedliche Vorgehensweisen möglich. Dabei kann die Sicherheitssteuerung 24 so ausgeführt sein, dass ein Programmierer nach seinem Belieben eine dieser drei Vorgehensweisen wählen kann. Es ist aber auch denkbar, dass lediglich eine oder zwei dieser Vorgehensweisen vorgesehen sind.

Eine erste Vorgehensweise ist durch eine erste Pfeilfolge 122 angedeutet. Hierbei werden sowohl die Konfigurationsdaten 58 als auch die Zuordnungsdaten 120 beispielsweise kabelgebunden von dem Computer 110 über eine hierfür vorgesehene erste Konfigurationsschnittstelle 124 auf den Datenspeicher 52 übertragen, der sich in der Steuereinheit 28 befindet. In diesem Fall handelt es sich bei der Verteileinheit um einen in der Sicherheitssteuerung 24 angeordneten Datenspeicher. Der in der Steuereinheit 28 angeordnete Datenspeicher 52 verteilt die Datenpakete 56, 56', 56", 56"', 56"", 118 gemäß den in den Zuordnungsdaten 120 enthaltenen Programmmodulzuordnungsdaten auf die einzelnen Datenspeicher 52, 52', 52", 52"', 52"" und den Datenbusmanager 116. Hierfür ist besagter Datenspeicher 52 dazu ausgebildet, ihm zugeführte Konfigurationsdaten 58 an zumindest einen anderen Datenspeicher oder den Datenbusmanager 116 weiterleiten zu können.

Eine zweite Vorgehensweise ist durch eine zweite Pfeilfolge 126 dargestellt. Hier werden die Konfigurationsdaten 58 und die Zuordnungsdaten 120 zunächst auf einer in dem Computer 110 enthaltenen externen Verteileinheit 128 bereitgestellt. Die externe Verteileinheit 128 entspricht dabei in ihrer Funktionalität dem in der Steuereinheit 28 enthaltenen Datenspeicher 52. Die Konfigurationsdaten 58 werden dann beispielsweise kabelgebunden über eine hierfür vorgesehene zweite Konfigurationsschnittstelle 130 dem Datenbus 34 zugeführt und gemäß den in den Zuordnungsdaten 120 enthaltenen Programmmodulzuordnungsdaten auf die einzelnen Datenspeicher 52, 52', 52", 52"', 52"" und den Datenbusmanager 116 verteilt.

Eine dritte Vorgehensweise ist durch eine dritte Pfeilfolge 132 angedeutet. Hierbei werden sowohl die Konfigurationsdaten 58 als auch die Zuordnungsdaten 120 auf ein mobiles Speichermedium 134 übertragen. Bei dem mobilen Speichermedium 134 kann es sich beispielsweise um eine SD-Card, eine CF-Card oder um einen USB-Stick handeln. Das mobile Speichermedium 134 wird dann in eine hierfür vorgesehene Aufnahmeeinheit 136 mit integrierter Konfigurationsschnittstelle eingeführt. Die Konfigurationsdaten 58 werden dann dem in der Steuereinheit 28 enthaltenen Datenspeicher 52 zugeführt, der das Verteilen der Datenpakete 56, 56', 56", 56"', 56"", 118 übernimmt. In entsprechender Weise können auch Programmdaten und Parametrisierungsdaten verteilt werden.

Was das Verteilen der Konfigurationsdaten 58 auf die einzelnen Datenspeicher 52, 52', 52", 52"', 52"" und den Datenbusmanager 116 angeht, so sind hier ebenfalls unterschiedliche Ansätze denkbar. Gemäß einem ersten Ansatz werden die Projektdaten 58 im Wesentlichen vor Ort, d.h. dort wo sie verarbeitet werden, abgespeichert. Also beispielsweise in demjenigen Datenspeicher derjenigen Steuereinheit, für deren Datenbusschnittstelle die Konfigurationsdaten bestimmt sind. Bei diesem Ansatz werden die Programmmodulzuordnungsdaten beispielsweise in Abhängigkeit von Zuordnungen, die der Ersteller des Anwenderprogramms vornimmt, ermittelt. Gemäß einem zweiten Ansatz werden die Zuordnungsdaten 120 in Abhängigkeit zumindest einer Datenverarbeitungskennzahl ermittelt. Bei diesem Ansatz werden die Konfigurationsdaten 58 dahingehend verteilt, dass sie bevorzugt in Steuerungskomponenten 26 abgespeichert werden, die über eine hohe Datenverarbeitungskapazität verfügen. Um ein beliebiges Verteilen der Konfigurationsdaten auf die einzelnen Datenspeicher 52, 52', 52", 52"', 52"" oder den Datenbusmanager 116 zu ermöglichen, muss zumindest ein Teil der Datenspeicher 52, 52', 52", 52"', 52"" oder der Datenbusmanager dazu ausgebildet sein, zugeführte Konfigurationsdaten weiterleiten und Konfigurationsdaten anfordern zu können. Zur Erhöhung der Verfügbarkeit der Sicherheitssteuerung 24 kann zumindest ein Teil der Konfigurationsdaten 58 redundant in den Datenspeichern 52, 52', 52", 52"', 52"" und dem Datenbusmanager 116 gespeichert. werden

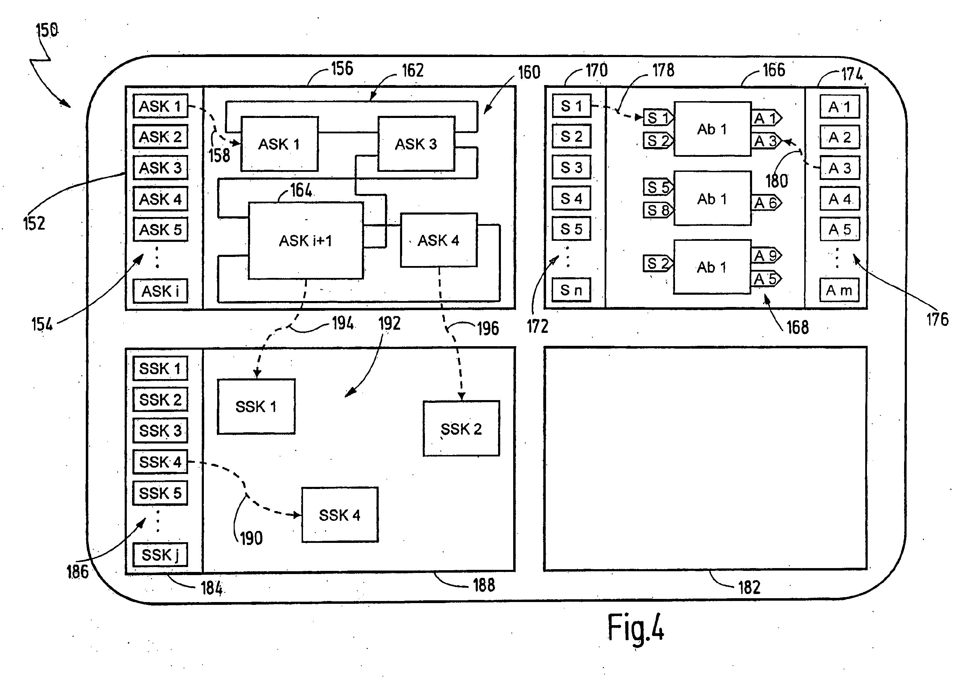

In Fig. 4 ist eine grafische Oberfläche in ihrer Gesamtheit mit der Bezugsziffer 150 bezeichnet. Diese grafische Oberfläche 150 ermöglicht einem Programmierer das Erstellen eines Anwenderprogramms und somit von Programmdaten. Gleichzeitig werden neben den Programmdaten auch Parametrisierungsdaten und die Konfigurationsdaten 58 erstellt.

Die grafische Benutzeroberfläche 150 beinhaltet ein Anlagensoftwarekomponenten-Feld 152, welches eine Vielzahl vordefinierter Anlagensoftwarekomponenten 154 in Form von grafischen Symbolen enthält. Das Anwenderprogramm und somit die Programmdaten werden durch Bereitstellen einer Vielzahl von Anlagensoftwarekomponenten erstellt. Zu diesem Zweck beinhaltet die grafische Benutzeroberfläche 150 ein erstes Komponenten-Feld 156. Die bereitzustellenden Anlagensoftwarekomponenten werden ausgewählt und in das erste Komponenten-Feld 156 überführt, wie dies durch einen Pfeil 158 angedeutet ist. Das erste Komponenten-Feld 156 enthält somit eine Vielzahl von bereitgestellten Anlagensoftwarekomponenten 160. Durch logisches Verknüpfen der bereitgestellten Anlagensoftwarekomponenten 160 wird ein Komponententeilprogramm erstellt. Hierzu werden Logikeingänge und Logikausgänge dieser Anlagensoftwarekomponenten untereinander verbunden, was durch eine Vielzahl von Verbindungen 162 dargestellt ist. Zusätzlich zu der Auswahl vordefinierter Anlagensoftwarekomponenten können auch neue Anlagensoftwarekomponenten erstellt werden, wie dies durch eine neue Anlagensoftwarekomponente 164 angedeutet ist. Bei den einzelnen Anlagensoftwarekomponenten kann es sich um so genannte Elementarkomponenten handeln, die selbst keine weiteren Softwarekomponenten enthalten. Es kann sich aber auch um so genannte Gruppenkomponenten handeln, die selbst weitere Softwarekomponenten enthalten. Eine Elementarkomponente enthält mehrere Aspektblöcke. Jeder dieser Aspektblöcke ist einem von mehreren untereinander unterschiedlichen Steuerungsaspekten zugeordnet, wobei jeder dieser Steuerungsaspekte einen eigenständigen Teilaspekt der Sicherheitssteuerung repräsentiert. Die Anlagensoftwarekomponente enthält dabei all diejenigen Aspektblöcke, die für diejenige Anlagenkomponente von Bedeutung sind, die die Anlagensoftwarekomponente repräsentiert. Im Vergleich zu einer Elementarkomponente enthält eine Gruppenkomponente neben den Aspektblöcken zusätzlich Softwarekomponenten, die als Elementar- oder als Gruppenkomponente ausgeführt sein können. Durch die Verwendung von Gruppenkomponenten kann ein Anwenderprogramm mit mehreren Hierarchieebenen erstellt werden. Jede der bereitgestellten Anlagensoftwarekomponenten 160 repräsentiert eines derjenigen Programmmodule, aus denen das Anwenderprogramm insgesamt aufgebaut ist. Vorteilhafterweise kann es sich bei den untereinander unterschiedlichen Steuerungsaspekten um folgende Steuerungsaspekte handeln: Standardsteuerungsaspekt, Sicherheitssteuerungsaspekt, Diagnoseaspekt, Visualisierungsaspekt, Eintrittsregelungsaspekt, Kühlungsaspekt, Zugriffsberechtigungsaspekt, Wartungsaspekt, Verriegelungsaspekt, Handbetriebsaspekt oder Datenverwaltungsaspekt.

Für jeden in einer Anlagensoftwarekomponente enthaltenen Aspektblock sind zumindest diejenigen Logikgrößen und/oder diejenigen Parameter und/oder diejenigen Sensorsignale, die zur Verarbeitung benötigt werden und über zugehörige Eingänge dem Aspektblock zuzuführen sind, und diejenigen Logikgrößen und/oder diejenigen Parameter und/oder diejenigen Ausgangssignale, die in der Anzahl von Aspektblöcken jeweils ermittelt und über zugehörige Ausgänge von dem Aspektblock ausgegeben werden, zunächst dem Grunde nach festgelegt. Das Festlegen der konkreten Sensoren und/oder Aktuatoren, die mit dem jeweiligen Aspektblock zu verbinden sind, erfolgt letztlich erst beim Erstellen des Anwenderprogramms. Ferner ist zumindest in einem Teil der in einer Anlagensoftwarekomponente enthaltenen Aspektblöcke jeweils ein Funktionsprogramm hinterlegt, welches Aspekteigenschaften der Anlagenkomponente für denjenigen Steuerungsaspekt festlegt, dem der jeweilige Aspektblock zugeordnet ist.

Die grafische Oberfläche 150 beinhaltet ferner ein Aspektfeld 166. In diesem Aspektfeld 166 ist eine Vielzahl von Aspektblöcken 168 angeordnet. Jeder dieser Aspektblöcke ist demselben Steuerungsaspekt zugeordnet. Dabei umfasst die Vielzahl von Aspektblöcken 168 die in sämtlichen Hierarchieebenen des Anwenderprogramms enthaltenen Aspektblöcke. Die grafische Oberfläche 150 beinhaltet weiter ein Sensorenfeld 170. In diesem Sensorenfeld 170 ist eine Vielzahl von grafischen Sensorsymbolen 172 angeordnet. Für jeden in der zu steuernden Anlage 10 enthaltenen Sensor ist dabei ein grafisches Sensorsymbol vorgesehen. Als weiteres Feld enthält die grafische Oberfläche 150 ein Aktuatorenfeld 174. In diesem Aktuatorenfeld 174 ist eine Vielzahl von grafischen Aktuatorensymbolen 176 angeordnet. Für jeden in der zu steuernden Anlage 10 enthaltenen Aktuator ist dabei ein grafisches Aktuatorensymbol vorgesehen. Für die in dem Aspektfeld 166 enthaltene Vielzahl von Aspektblöcken 168 wird ein Aspektteilprogramm erstellt. Hierzu wird zumindest für einen Teil der Aspektblöcke sowohl für deren Eingänge als auch für deren Ausgänge ein so genanntes I/O-Mapping durchgeführt. Das heißt, zumindest einem Teil der Signaleingänge werden diejenigen Sensoren zugeordnet, deren Sensorsignale in dem jeweiligen Aspektblock verarbeitet werden. Dies ist beispielhaft durch einen Pfeil 178 dargestellt. Außerdem werden zumindest einem Teil der Steuerungsausgänge Aktuatoren zugeordnet, die mit den in dem jeweiligen Aspektblock ermittelten Ausgangssignalen angesteuert werden. Dies ist beispielhaft durch einen Pfeil 180 angedeutet.

Alternativ kann das I/O-Mapping auch durch textuelle Eingaben in einem Eingabefeld 182 vorgenommen werden.

Die grafische Oberfläche 150 beinhaltet ein Steuerungssoftwarekomponenten-Feld 184, welches eine Vielzahl vordefinierter Steuerungssoftwarekomponenten 186 enthält. Jede dieser Steuerungssoftwarekomponenten 186 repräsentiert eine Steuerungskomponente 26, die in einer verteilt aufgebauten Sicherheitssteuerung 24 eingesetzt werden kann. Die grafische Oberfläche 170 beinhaltet ferner ein zweites Komponenten-Feld 188. In diesem zweiten Komponenten-Feld 188 kann der Programmierer des Anwenderprogramms diejenigen Steuerungssoftwarekomponenten einfügen, die diejenigen Steuerungskomponenten repräsentieren, aus denen die verteilte Sicherheitssteuerung 24 aufgebaut ist. Dies erfolgt durch Auswahl einzelner Steuerungssoftwarekomponenten 186 und Überführen in das zweite Komponenten-Feld 188, wie dies beispielhaft durch einen Pfeil 190 angedeutet ist. Das zweite Komponenten-Feld 188 enthält somit eine Vielzahl von bereitgestellten Steuerungssoftwarekomponenten 192. Möchte der Programmierer zumindest für einen Teilumfang des Anwenderprogramms festlegen, welche Projektdaten, insbesondere welche Programmdaten und welche Konfigurationsdaten in welcher Steuerungskomponente 26 verarbeitet und somit in dem zugehörigen Datenspeicher gespeichert werden sollen, so kann er zumindest einen Teil der bereitgestellten Anlagensoftwarekomponenten 160 den bereitgestellten Steuerungssoftwarekomponenten 192 zuordnen. Dies ist durch Programmmodulzuordnungen 194, 196 angedeutet. Aus diesen Programmmodulzuordnungen werden Programmmodulzuordnungsdaten und somit Zuordnungsdaten ermittelt, in deren Abhängigkeit dann die Konfigurationsdaten 58 ermittelt werden.

Die Programmmodulzuordnungsdaten können vorteilhaft auch automatisch, d.h. ohne dass der Programmierer Programmmodulzuordnungen vornimmt, ermittelt werden. Hierfür ist für jede durch eine Steuerungssoftwarekomponente 192 repräsentierte Steuerungskomponente 26 zumindest ein Datenverarbeitungskennzahlenwert in einer Datenbank hinterlegt, so dass die Programmmodulzuordnungen beispielsweise in Abhängigkeit dieser Datenverarbeitungskennzahlenwerte vorgenommen werden können und somit die Programmmodulzuordnungsdaten ermittelt werden können. In diesem Fall erfolgt das Verteilen der Programmdaten und der Konfigurationsdaten auf die einzelnen Steuerungskomponenten und somit die Datenspeicher unter dem Gesichtspunkt der Datenverarbeitungskapazität der einzelnen Steuerungskomponenten. Es ist aber auch denkbar, die Programmmodulzuordnungsdaten sowohl in Abhängigkeit von Datenverarbeitungskennzahlenwerten als auch in Abhängigkeit von vom Programmierer vorgenommenen Programmmodulzuordnungen zu ermitteln. Beispielsweise kann unter Verwendung der Datenverarbeitungskennzahlenwerte zunächst ein Vorschlag für eine Zuordnung erstellt werden, den der Programmierer dann immer noch nach seinen Vorstellungen gemäß von ihm vorgenommenen Programmmodulzuordnungen abändern kann.

Für die Aspektblöcke 188 können vordefinierte Parametrisierungsdaten in einer Datenbank hinterlegt sein. Es besteht zudem auch die Möglichkeit, Parametrisierungsdaten beim Erstellen des Anwenderprogramms abzuändern oder überhaupt vorzugeben, beispielsweise durch entsprechende Eingaben in das Eingabefeld 182. Dies kann beispielsweise auch erfolgen, nachdem das Anwenderprogramm erstellt ist.

Die Programmmodulzuordnungen und somit die Programmmodulzuordnungsdaten enthalten nicht nur eine Information darüber, welches Programmmodul welcher Steuerungssoftwarekomponente und somit welcher Steuerungskomponente zugeordnet ist. Die Programmmodulzuordnungsdaten enthalten darüber hinaus weitergehende Informationen. Ausgehend von den Verbindungen 162 enthalten sie auch Daten darüber, welche Steuerungskomponenten untereinander verbunden sind, und über welche Eingänge und Ausgänge der einzelnen Steuerungskomponenten dies realisiert ist. Ferner enthalten die Programmmodulzuordnungsdaten auch eine Information und somit Daten darüber, welche Sensoren und welche Aktuatoren den einzelnen Steuereinheiten zugeordnet sind. Mit Hilfe des Aspektfeldes 166 wird eine Zuordnung zwischen den einzelnen Aspektblöcken 168 und den Sensoren und Aktuatoren vorgenommen. Ferner ist bekannt, welche Funktionsprogramme in den einzelnen Aspektblöcken enthalten sind, d.h. welche Programmeingangsvariablen und Programmausgangsvariablen bzw. welche Daten konsumierenden Steueranweisungen und welche Daten erzeugenden Steueranweisungen in den einzelnen Aspektblöcken verarbeitet werden. Somit ist festgelegt, welcher Sensor welcher Programmeingangsvariable und welcher Aktuator welcher Programmausgangsvariable zugeordnet ist. Da die einzelnen Aspektblöcke jeweils eindeutig einer Anlagensoftwarekomponente zugeordnet sind, ist ferner bekannt, welcher Aspektblock in welcher Anlagensoftwarekomponente enthalten ist. Über die Programmmodulzuordnungen ist somit bekannt, welcher Sensor und welcher Aktuator mit welcher Steuereinheit verbunden ist. Aufgrund des für die Aspektblöcke durchgeführten I/O-Mappings ist zudem bekannt, welchen Eingangs- und Ausgangsklemmen die einzelnen Sensoren und Aktuatoren zugeordnet sind. Mit anderen Worten: Für die Steuereinheiten ist sowohl das Eingangsabbild als auch das Ausgangsabbild bekannt. Dies ist eine für die Konfiguration der Kommunikationsbeziehungen relevante Information.

Der mit Hilfe von Fig. 4 beschriebenen Vorgehensweise für das Erstellen eines Anwenderprogramms liegt ein neues Konzept zugrunde. Bei diesem neuen Konzept wird zunächst eine funktionale Sicht auf die Applikation und somit das zu lösende Automatisierungsproblem eingenommen. Darauf aufbauend wird zunächst unabhängig von den später verwendeten Steuerungskomponenten eine funktionale Gesamtapplikation entwickelt. Hierbei handelt es sich um das im Zusammenhang mit dem ersten Komponentenfeld 156 beschriebene Erstellen eines Komponententeilprogramms und dem im Zusammenhang mit dem Aspektfeld 166 beschriebenen Erstellen von Aspektteilprogrammen und ggf. dem Erstellen der in den Aspektblöcken enthaltenen Funktionsprogrammen. In einem weiteren Schritt wird dann die funktionale Gesamtapplikation auf eine Gerätekonfiguration, d.h. auf eine Vielzahl von Steuerungskomponenten, bei denen es sich um Steuereinheiten, Sensoren und Aktuatoren handelt, aufgeteilt. Die Kommunikationsbeziehungen, die für den Datenaustausch innerhalb der Sicherheitssteuerung zwischen den einzelnen Steuerungskomponenten erforderlich sind, werden dabei automatisch ermittelt. Dieses neue Konzept hat gegenüber der bisherigen Vorgehensweise, bei der zunächst eine Gerätekonfiguration erstellt und darauf aufbauend die einzelnen Programme für die in der Gerätekonfiguration enthaltenen Steuereinheiten programmiert und die Kommunikationsbeziehungen zwischen den einzelnen Steuereinheiten und den Sensoren und Aktuatoren aufwendig von Hand aus programmiert werden, folgende Vorteile: Ein einmal erstelltes Anwenderprogramm verfügt über eine hohe Wiederverwertbarkeit. Aufgrund der zunächst geräteunabhängigen Entwicklung der funktionalen Gesamtapplikation kann ein Anwenderprogramm bei einer ähnlichen Anlage, die zu einem späteren Zeitpunkt aufgebaut wird, erneut eingesetzt werden. Die hohe Wiederverwertbarkeit betrifft nicht nur das gesamte Anwenderprogramm, sie betrifft auch die einzelnen Programmmodule, aus denen das Anwenderprogramm aufgebaut ist. Dies ist für den Fall von Vorteil, dass eine bereits bestehende Anlage modifiziert werden soll. Soll beispielsweise eine in einer Anlage vorhandene Prozessstation verdoppelt werden, um die Bearbeitungskapazität der Anlage zu erhöhen, so muss lediglich eine Kopie derjenigen Anlagensoftwarekomponente erstellt werden, die die Prozessstation repräsentiert. Die kopierte Anlagensoftwarekomponente muss dann lediglich noch mit den bereits vorhandenen Anlagensoftwarekomponenten verbunden werden.

Ein weiterer Vorteil besteht in der Skalierbarkeit, die sich daraus ergibt, dass die funktionale Gesamtapplikation zunächst geräteunabhängig entwickelt wird. So kann ein und dasselbe Anwenderprogramm auf unterschiedlich konfigurierten Sicherheitssteuerungen implementiert werden. Beispielsweise auf einer Sicherheitssteuerung, die lediglich über eine große und somit leistungsfähige Steuereinheit verfügt oder aber auf einer verteilt aufgebauten Sicherheitssteuerung, die mehrere kleinere und somit leistungsschwächere Steuereinheiten enthält.

Zudem reduziert sich der Zeitaufwand für das Erstellen eines Anwenderprogramms. Aufgrund der zentralen funktionalen Sicht auf ein verteiltes System und aufgrund der Tatsache, dass sich der Programmierer zunächst keine Gedanken über die zu verwendenden Steuerungskomponenten machen muss, kann er sich auf die Entwicklung der funktionalen Gesamtapplikation konzentrieren. Zudem entfällt der Zeitaufwand für eine aufwendige manuelle Ausprogrammierung der Kommunikationsbeziehungen.

Mit dem neuen Konzept sind somit verteilt aufgebaute Sicherheitssteuerungen in einfacher Art und Weise beherrschbar. Somit sind alle Vorteile einer verteilt aufgebauten Sicherheitssteuerung nutzbar. Es erhöht sich die Anlagenverfügbarkeit, da sich eventuelle Störungen nur auf begrenzte Teilbereiche der Sicherheitssteuerung auswirken. Zudem können kürzere Reaktionszeiten realisiert werden, da eine echte Parallelisierung von Steuerungsaufgaben möglich ist und Teilumfänge eines Anwenderprogramms vor Ort ausgeführt werden können. Darüber hinaus können Sicherheitssteuerungen kostengünstiger realisiert werden. Zum einen sinken die Kosten für die Verdrahtung und das Erstellen des Anwenderprogramms. Zum anderen ergibt sich eine Kostensenkung daraus, dass Steuerungsfunktionalitäten auf ohnehin vorhandenen intelligenten Ein-/Ausgabegeräte implementiert werden können.

Die bereits erwähnte Geräteunabhängigkeit des neuen Konzepts manifestiert sich an zwei Stellen. Zum einen wird die funktionale Gesamtapplikation auf eine beliebig verteilt aufgebaute Sicherheitssteuerung verteilt. Dieser Vorgang wird als Deployment bezeichnet. Zum anderen wird durch Zuordnung von symbolischen Variablen zu physikalischen Ein-/Ausgängen der Steuereinheiten ein I/O-Mapping realisiert.

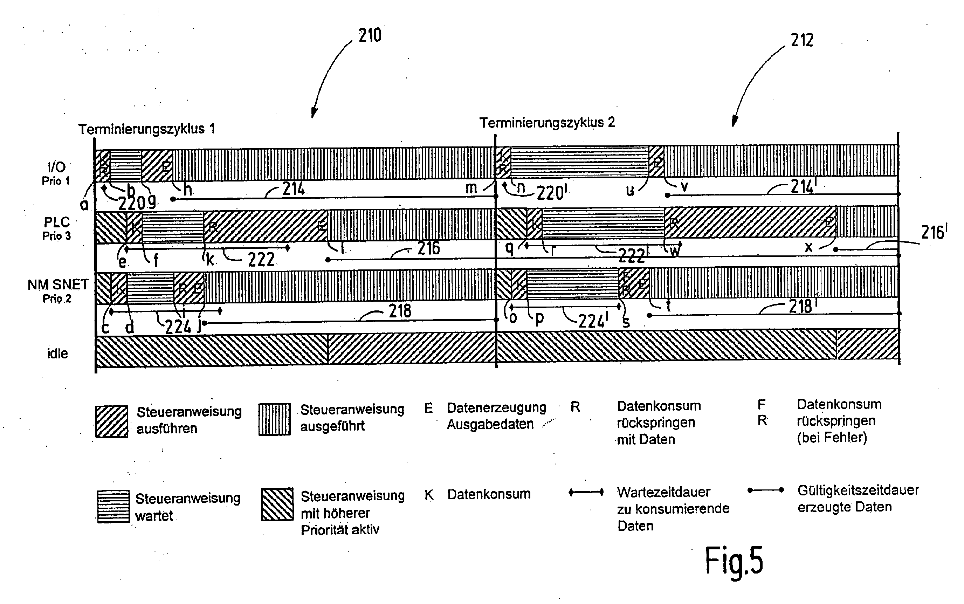

In Fig. 5 sind zwei Terminierungszyklen 210, 212 einer Signalverarbeitungskette dargestellt, wobei die Reihenfolge der Verarbeitungszuordnungen durch eine Buchstabenfolge a bis x angedeutet ist. Die Signalverarbeitungskette besteht aus mehreren Steueranweisungen, an denen mehrere Einheiten beteiligt sind. Bei diesen Einheiten handelt es sich um ein mit "I/O" bezeichnetes Ein-/Ausgabegerät, eine mit "PLC" bezeichnete Steuereinheit und um einen mit "NM SNET" bezeichneten Datenbusmanager. Diesen Einheiten sind unterschiedliche Prioritäten zugeordnet, wobei die höchste Priorität mit "Prio 1" und die niedrigste Priorität mit "Prio 3" bezeichnet sind. Mit "idle" sind weitere Steueranweisungen bezeichnet, deren Priorität niedriger als "Prio 3" ist, die für die nachfolgende Betrachtung jedoch nicht von Bedeutung sind. Wie Fig. 5 zu entnehmen ist, muss der Datenbusmanager NM SNET hier auf Daten warten, die von dem Ein-/Ausgabegerät bereitgestellt werden. Die Steuereinheit muss sowohl auf das Ein-/Ausgabegerät als auch auf den Datenbusmanager warten. Das Ein-/Ausgabegerät wartet auf Daten, die von der Steuereinheit in den davor liegenden Terminierungszyklus erzeugt werden.

In Fig. 5 sind verschiedene Gültigkeitszeitdauern eingetragen. Eine erste Gültigkeitszeitdauer 214 für von dem Ein-/Ausgabegerät erzeugte Daten. Eine zweite Gültigkeitszeitdauer 216 für von der Steuereinheit erzeugte Daten. Eine dritte Gültigkeitszeitdauer 218 für von dem Datenbusmanager erzeugte Daten. Darüber hinaus sind in Fig. 5 verschiedene Wartezeitdauern eingetragen. Die einzelnen Wartezeitdauern geben an, wie lange die jeweilige Einheit auf die von ihr zu konsumierenden Daten wartet. Eine erste Wartezeitdauer 220 des Ein-/Ausgabegeräts. Da das Ein-/Ausgabegerät jeweils den ersten Datenkonsum innerhalb eines Terminierungszyklus hat, ist diese Wartezeitdauer auf 0 Sekunden gesetzt. Eine zweite Wartezeitdauer 222 der Steuereinheit. Während dieser Wartezeitdauer wartet die Steuereinheit sowohl auf die von dem Ein-/Ausgabegerät erzeugten Daten als auch auf die von dem Datenbusmanager erzeugten Daten. Eine dritte Wartezeitdauer 224 des Datenbusmanagers. Während dieser Wartezeitdauer wartet der Datenbusmanager auf die von dem Ein-/Ausgabegerät erzeugten Daten. Wie der Darstellung in Fig. 5 zu entnehmen ist, sind die Wartezeitdauern der einzelnen Einheiten jeweils statisch, d.h. fest definiert. Die Zeitdauer, die zwischen dem Beginn und dem Ende der Wartezeitdauer liegt, ist für sämtliche Terminierungszyklen identisch. Dahingegen kann die Gültigkeitszeitdauer für die von einer Einheit erzeugten Daten für die einzelnen Terminierungszyklen variieren. Dies rührt daher, dass die jeweilige Gültigkeitszeitdauer angibt, wie viele Terminierungszyklen die erzeugten Daten gültig sind, wobei derjenige Terminierungszyklus mit berücksichtigt wird, in dem die Daten erzeugt werden. Dies führt dazu, dass beispielsweise die Gültigkeitszeitdauern 214, 214' des Ein-/Ausgabegeräts in den beiden Terminierungszyklen 210, 212 variieren, da die von dem Ein-/Ausgabegerät erzeugten Daten zu unterschiedlichen Zeitpunkten innerhalb des jeweiligen Terminierungszyklus bereitgestellt werden.

In dem Terminierungszyklus 210 werden sämtliche Daten so rechtzeitig erzeugt, dass diese für den jeweiligen Datenkonsum bereitstehen. Wohingegen im Terminierungszyklus 212 das Ein-/Ausgabegerät seine Daten nicht rechtzeitig innerhalb der Wartezeitdauer 224' des Datenbusmanagers bereitstellt. Aus diesem Grund stellt der Datenbusmanager zu dem mit s gekennzeichneten Zeitpunkt von ihm erzeugte Daten bereit, obwohl die von ihm benötigten Daten des Ein-/Ausgabegeräts nicht verfügbar sind. Dieser Mechanismus ermöglicht eine Weiterarbeit des Datenbusmanagers, so dass der Steuereinheit von ihr benötigte Daten vorliegen. Die Berücksichtigung von Wartezeiten ermöglicht ein Arbeiten der Sicherheitssteuerung, auch wenn einzelne Daten nicht rechtzeitig bereitgestellt werden. Was die Ausgabe von Daten durch den Datenbusmanager zu dem mit s gekennzeichneten Zeitpunkt angeht, sind mehrere Möglichkeiten denkbar. Beispielsweise kann ein vordefinierter Defaultwert ausgegeben werden oder erneut der im vorhergehenden Terminierungszyklus ausgegebene Wert.

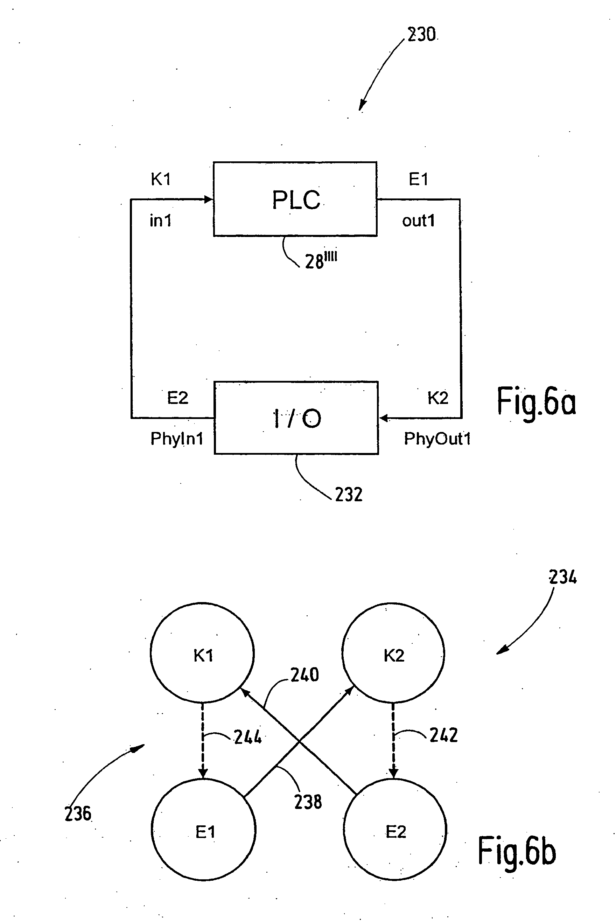

Fig. 6 besteht aus zwei Teilfiguren 6a und 6b. Teilfigur 6a zeigt eine einfach aufgebaute Sicherheitssteuerung 230, die aus einer Steuereinheit 28"" und einem Ein-/Ausgabegerät 232 besteht, wobei beide zusammen eine bauliche Einheit bilden. In der Steuereinheit 28"" wird folgendes Anwenderprogramm abgearbeitet:

```
             PROGRAM MyPrg
             VAR
                    in1 AT %i*: BOOL;
                    out1 AT %q*: BOOL;
             END VAR
              (* functinal definition *)
             END_PROGRAM
```

Die Ein- und Ausgänge des Ein-/Ausgabegerät 232 sind wie folgt definiert:
PhyIn1 : BOOL; (* Input *)
PhyOut1 : BOOL; (* Output *)

Daraus ergibt sich folgendes I/O-Mapping:
in1 : PhyIn1
out1 : PhyOut1

Dieser softwaretechnische Sachverhalt stellt sich insgesamt wie folgt dar: Die Steuereinheit 28"" erzeugt aufgrund einer Daten erzeugenden Steueranweisung E1 einen Momentanwert für eine Ausgangsvariable out1, der von dem Ein-/Ausgabegerät 232 aufgrund einer Daten konsumierenden Steueranweisung K2 über seinen Ausgang PhyOut1 ausgegeben wird. Gleichzeitig liest das Ein-/Ausgabegerät 232 aufgrund einer Daten erzeugenden Steueranweisung E2 über seinen Eingang PhyIn1 einen Momentanwert ein, der in der Steuereinheit 28"" aufgrund einer Daten konsumierenden Steueranweisung K1 einer Eingangsvariable in1 zugewiesen wird.

Die vorstehend beschriebene Verarbeitungsreihenfolge der einzelnen Steueranweisungen E1, E2, K1, K2 ist in Teilfigur 6b mit Hilfe eines Abhängigkeitsgraphen 234, der eine Vielzahl von Verarbeitungszuordnungen 236 aufweist, dargestellt. Eine erste Verarbeitungszuordnung 238 ordnet die Daten erzeugende Steueranweisung E1 der Daten konsumierenden Steueranweisung K2 zu. Eine zweite Verarbeitungszuordnung 240 ordnet die Daten erzeugende Steueranweisung E2 der Daten konsumierenden Steueranweisung K1 zu. Des Weiteren hängt die Daten erzeugende Steueranweisung E2 von der Daten konsumierenden Steueranweisung K2 und die Daten erzeugende Steueranweisung E1 von der Daten konsumierenden Steueranweisung K1 ab, was durch eine dritte Verarbeitungszuordnung 242 und eine vierte Verarbeitungszuordnung 244 dargestellt ist. Die Verarbeitungszuordnungen 236 werden dabei nach folgenden Regeln ermittelt: Eine Daten konsumierende Steueranweisung hängt von einer Daten erzeugenden Steueranweisung dann ab, wenn die Daten konsumierende Steueranweisung eine Variable enthält, die ebenfalls in der Daten erzeugenden Steueranweisung enthalten ist. Eine Daten erzeugende Steueranweisung hängt von einer Daten konsumierenden Steueranweisung dann ab, beide Steueranweisungen zur selben Einheit, beispielsweise der Steuereinheit 28"" gehören.

In der Abhängigkeit der Verarbeitungszuordnungsdaten, die die Verarbeitungszuordnungen 236 repräsentieren, werden Konfigurationsdaten vorteilhaft ermittelt wie folgt: Nachdem in einem ersten Schritt die Daten erzeugenden und Daten konsumierenden Steueranweisungen der zu betrachtenden Signalverarbeitungskette festgelegt und die Verarbeitungszuordnungen zwischen den einzelnen Steueranweisungen ermittelt sind, werden in einem zweiten Schritt die für diese Steueranweisungen geltenden Zykluszeiten ermittelt. Dabei wird von den für die Sicherheitssteuerung vordefinierten Zykluszeiten ausgegangen. Im vorliegenden Beispiel ist für die Steuereinheit 28"" eine Zykluszeit von 20 Millisekunden vordefiniert. Für das Ein-/Ausgabegerät 232 ist dagegen keine Zykluszeit vordefiniert. Folglich gilt sowohl für die Daten erzeugende Steueranweisung E1 als auch für die Daten konsumierende Steueranweisung K1 eine Zykluszeit von 20 Millisekunden. Ausgehend von denjenigen Steueranweisungen, für die vordefinierte Zykluszeiten gelten, werden nun automatisch die Zykluszeiten für diejenigen Steueranweisungen ermittelt, für die keine vordefinierten Steueranweisungen gelten. Im vorliegenden Beispiel handelt es sich hierbei um die beiden Steueranweisungen E2 und K2.

Hierbei wird folgender Mechanismus angewandt: Ausgehend von einer Daten konsumierenden Steueranweisung, für die eine Zykluszeit vordefiniert ist, werden entgegen der durch die Verarbeitungszuordnungen vorgegebenen Verarbeitungsrichtungen, also rückwärts, diejenigen Daten erzeugenden und Daten konsumierenden Steueranweisungen ermittelt, die ausgehend von besagter Daten konsumierenden Steueranweisung direkt erreichbar sind. Für diese Steueranweisungen wird ebenfalls die vordefinierte Zykluszeit als gültig angenommen. Dabei wird so lange verfahren, bis sich keine Änderung mehr ergibt. Im vorliegenden Beispiel ist für die Daten konsumierende Steueranweisung K1 die Daten erzeugende Steueranweisung E2 direkt erreichbar. Somit gilt auch für diese Steueranweisung die Zykluszeit 20 Millisekunden. Ausgehend von einer Daten erzeugenden Steueranweisung, für die eine Zykluszeit vordefiniert ist, werden entsprechend der durch die Verarbeitungszuordnungen vorgegebenen Verarbeitungsrichtungen, also vorwärts, diejenigen Daten erzeugenden und Daten konsumierenden Steueranweisungen ermittelt, die ausgehend von besagter Daten erzeugenden Steueranweisung direkt erreichbar sind. Für diese Steueranweisungen wird ebenfalls die vordefinierte Zykluszeit als gültig angenommen. Dabei wird so lange verfahren, bis sich keine Änderung mehr ergibt. Im vorliegenden Beispiel ist für die Daten erzeugende Steueranweisung E1 die Daten konsumierende Steueranweisung K2 direkt erreichbar. Somit gilt auch für diese Steueranweisung die Zykluszeit 20 Millisekunden.

Sofern für eine Anzahl der Daten erzeugenden oder Daten konsumierenden Steueranweisungen jeweils eine Vielzahl von Zykluszeiten ermittelt werden, ist für jede einzelne dieser Steueranweisungen eine Basiszykluszeit zu ermitteln. Die Basiszykluszeit ergibt sich dabei als größter gemeinsamer Teiler der einzelnen Zykluszeiten. Das Erfordernis, Basiszykluszeiten zu ermitteln, ist vorwiegend dann gegeben, wenn Daten erzeugende und Daten konsumierende Steueranweisungen mehrerer miteinander verbundener Signalverarbeitungsketten betrachtet werden. Bei der Ermittlung von Basiszykluszeiten sind Randbedingungen, wie beispielsweise minimale und maximale Zykluszeiten und die Reaktionszeit der Sicherheitssteuerung zu berücksichtigen. Im vorliegenden Beispiel ist keine Basiszykluszeit zu ermitteln.

In einem weiteren Schritt wird eine Terminierungszykluszeit ermittelt. Diese ergibt sich als größter gemeinsamer Teiler der Zykluszeiten, ggf. der Basiszykluszeiten aller betrachteten Daten erzeugenden und Daten konsumierenden Steueranweisungen. Durch die Terminierungszykluszeit sind die einzelnen Zeitpunkte definiert, zu denen die Daten der betrachteten Daten erzeugenden Steueranweisungen spätestens vorliegen müssen, um ein deterministisches Verhalten der Sicherheitssteuerung zu erreichen. Vorteilhafterweise ist die Terminierungszykluszeit für ein Projekt insgesamt einheitlich. Es ist aber auch denkbar, innerhalb eines Projektes mehrere Terminierungszykluszeiten zuzulassen. Diese müssen dann allerdings im Verhältnis ganzer Zahlen zueinander stehen. Basis ist hier die minimale Terminierungszykluszeit. Dies ist beispielsweise dann von Bedeutung, wenn innerhalb einer Sicherheitssteuerung eine Steuerungskomponente eingesetzt wird, die eine strenge minimale Terminierungszykluszeit aufweist. In diesem Fall soll verhindert werden, dass die übrigen Komponenten der Sicherheitssteuerung in ihrer Bearbeitungsgeschwindigkeit beeinträchtigt werden. Vorteilhafterweise kann auch eine Terminierungszykluszeit zugelassen werden, die kleiner als der größte gemeinsame Teiler ist. Im vorliegenden Beispiel beträgt die Terminierungszykluszeit 20 Millisekunden.

In einem weiteren Schritt werden für die betrachteten Daten erzeugenden Steueranweisungen jeweils Gültigkeitszeitdauern ermittelt. Vorteilhafterweise entspricht die jeweilige Gültigkeitszeitdauer der jeweiligen Zykluszeit, ggf. der jeweiligen Basiszykluszeit der Daten erzeugenden Steueranweisung. Dabei ist allerdings darauf zu achten, dass zyklische Abhängigkeiten aufgelöst werden. Es soll also nicht der Fall auftreten, dass für alle betrachteten Daten erzeugenden Steueranweisungen die Gültigkeitszeitdauern zum selben Terminierungszyklus enden. Wäre dies der Fall, würde dies zu einer gegenseitigen Blockierung der Steueranweisungen führen. Eine zyklische Abhängigkeit wird dadurch aufgelöst, dass beispielsweise für eine der Daten erzeugenden Steueranweisungen die Gültigkeitszeitdauer verdoppelt wird. Im vorliegenden Beispiel haben beide Daten erzeugenden Steueranweisungen E1 und E2 jeweils eine Gültigkeitszeitdauer von 20 Millisekunden. Folglich liegt eine zyklische Abhängigkeit vor. Diese wird beispielsweise dadurch aufgelöst, dass die Gültigkeitszeitdauer für die Daten erzeugende Steueranweisung E1 auf 40 Millisekunden erhöht wird.

In einem weiteren Schritt werden für die betrachteten Daten konsumierenden Steueranweisungen die jeweiligen Wartezeitdauern ermittelt. Der Wert der Wartezeitdauer ergibt sich dabei als halber Wert der jeweiligen Zykluszeit, ggf. der jeweiligen Basiszykluszeit der jeweiligen Steueranweisung. Im vorliegenden Beispiel beträgt die Wartezeitdauer für die Daten konsumierende Steueranweisung K1 10 Millisekunden. Die Wartezeitdauer der Daten konsumierenden Steueranweisung K2 beträgt ebenfalls 10 Millisekunden.

Aus den Verarbeitungszuordnungsdaten werden hier also automatisch folgende Konfigurationsdaten ermittelt: die Terminierungszykluszeit, die Zykluszeiten bzw. Basiszykluszeiten der einzelnen Steueranweisungen, die Gültigkeitszeitdauern für die Daten erzeugenden Steueranweisungen und die Wartezeitdauern für die Daten konsumierenden Steueranweisungen.

Da im vorliegenden Beispiel die Steuereinheit 28"" und das Ein-/Ausgabegerät 32 eine bauliche Einheit bilden, umfassen die Konfigurationsdaten keine Synchronisationsdaten. Für den Fall, dass die für eine Signalverarbeitungskette betrachteten Daten erzeugenden und Daten konsumierenden Steueranweisungen auf mehrere Steuerungskomponenten einer Sicherheitssteuerung aufgeteilt sind, werden in Abhängigkeit der Bearbeitungszuordnungsdaten auch Synchronisationsdaten automatisch ermittelt.

In Abhängigkeit von Programmmodulzuordnungsdaten werden Datenrahmenzuweisungsdaten ermittelt.

Somit können die Konfigurationsdaten in Abhängigkeit von Zuordnungsdaten umfassend ermittelt werden.

Der im Zusammenhang mit den Teilfiguren 6a und 6b beschriebenen Mechanismus wird von dem Computerprogramm 114 automatisch, d.h. selbsttätig abgearbeitet, nachdem der Ersteller des Anwenderprogramms eine definierte Zykluszeit für die Steuereinheit 28'" vorgegeben hat. Die Konfigurationsdaten der weiteren Steuerungskomponenten, die mit der Steuereinheit 28'" zusammenarbeiten, werden in Abhängigkeit von der definierte Zykluszeit für die Steuereinheit 28'" automatisch ermittelt. Selbstverständlich kann dieser Mechanismus auf andere Steueranweisungen angewandt werden, wie etwa die in einem Programmmodul enthaltenen Steueranweisungen. Somit können die Konfigurationsdaten auf die einzelnen Programmmodule bezogen ermittelt werden. Es ist aber auch denkbar, diesen Mechanismus einmalig auf sämtliche Steueranweisungen des Anwenderprogramms anzuwenden.

Mit dem vorstehend beschriebenen Mechanismus werden ferner folgende Konfigurationsdaten für den Datenbusmanager automatisch ermittelt: Eine Gültigkeitszeitdauer, Daten mit denen sich die einzelnen Uhren der einzelnen Steuerungskomponenten synchronisieren lassen und Daten, mit denen sich die einzelnen Timer Interrupts der einzelnen Steuerungskomponenten synchronisieren lassen.

Vorzugsweise wird vorstehend beschriebener Mechanismus für die Konfiguration von Kommunikationsbeziehungen angewandt, die der Übertragung von Echtzeitdaten dienen.

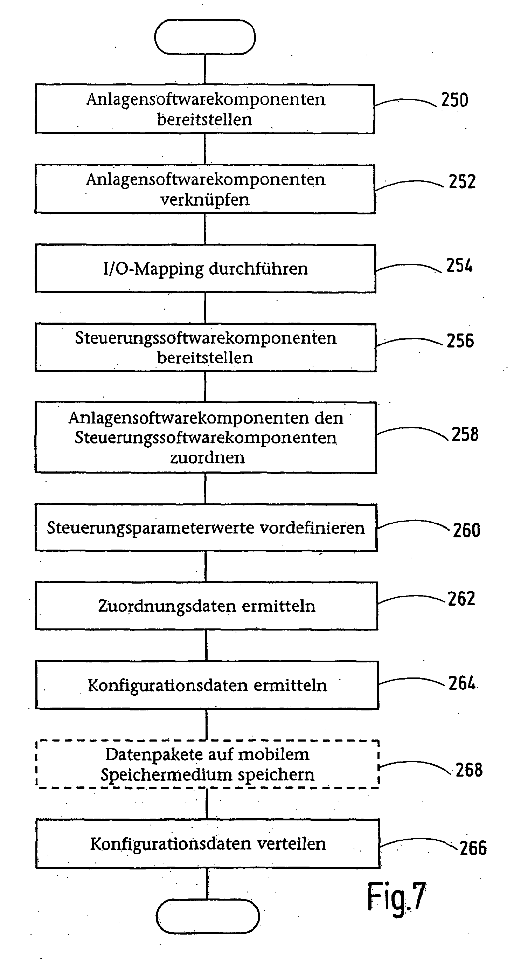

Das in Fig. 7 dargestellte Flussdiagramm zeigt den Ablauf des neuen Verfahrens. Gemäß einem Schritt 250 werden Anlagensoftwarekomponenten bereitgestellt. In einem nachfolgenden Schritt 252 werden die Anlagensoftwarekomponenten verknüpft. Daran schließt sich ein Schritt 254 an, in dem für die in den Anlagensoftwarekomponenten enthaltenen Aspektblöcke ein I/O-Mapping durchgeführt wird. In einem nachfolgenden Schritt 256 werden Steuerungssoftwarekomponenten bereitgestellt. In einem sich anschließenden Schritt 258 werden die Anlagensoftwarekomponenten den Steuerungssoftwarekomponenten zugeordnet. In einem weiteren Schritt 260 werden ausgewählte Steuerungsparameterwerte vom Programmierer vordefiniert. Beispielsweise werden Werte für einzelne Zykluszeiten und/oder Abtastraten vorgegeben, oder es wird die Reaktionszeit der Sicherheitssteuerung definiert. Die Reaktionszeit ist diejenige Zeit, die vom Erkennen eines Eingangssignals bis zur Änderung eines damit verknüpften Ausgangssignals vergeht. In einem weiteren Schritt 262 werden Zuordnungsdaten ermittelt. Die Zuordnungsdaten umfassen dabei Programmmodulzuordnungsdaten und Verarbeitungszuordnungsdaten. Die Programmmodulzuordnungsdaten repräsentieren von dem Programmierer des Anwenderprogramms vorgenommene Programmmodulzuordnungen. Die Programmmodulzuordnungsdaten können aber auch in Abhängigkeit von Datenverarbeitungskennzahlen ermittelte Programmmodulzuordnungen repräsentieren. Die Verarbeitungszuordnungsdaten repräsentieren eine Anzahl von Verarbeitungszuordnungen, die für zumindest einen Teil der Steueranweisungen eine Verarbeitungsreihenfolge der einzelnen Steueranweisungen definieren. In nächsten Schritt 264 werden nun die Konfigurationsdaten in Abhängigkeit der Zuordnungsdaten automatisch ermittelt. In einem Schritt 266 werden dann die Konfigurationsdaten auf den Datenbusmanager und die einzelnen Steuerungskomponenten verteilt. Je nachdem, nach welcher Vorgehensweise das Verteilen der Konfigurationsdaten erfolgt, schließt sich der Schritt 266 nicht unmittelbar an den Schritt 264 an. Werden die Konfigurationsdaten unter Einsatz eines mobilen Speichermediums verteilt, so wird zwischen dem Schritt 264 und dem Schritt 266 ein Schritt 268 ausgeführt, in welchem die Konfigurationsdaten und die Zuordnungsdaten auf dem mobilen Speichermedium gespeichert werden.

Die neue Sicherheitssteuerung und das neue Verfahren ermöglichen somit ein automatisches Ermitteln einer Vielzahl von Konfigurationsdaten für die Kommunikationsbeziehungen einer Sicherheitssteuerung in Abhängigkeit von einigen wenigen Vorgaben, die der Programmierer der Sicherheitssteuerung auswählt. Besonders vorteilhaft ist es, wenn die Konfigurationsdaten für den Datenbusmanager automatisch anhand der vom Programmierer ausgewählten Vorgaben bestimmt werden. Das neue Verfahren bezieht also den Datenbusmanager in die Konfiguration der Steuerungskomponenten mit ein. Was das automatische Ermitteln der Konfigurationsdaten angeht, ist das Augemerk dabei darauf gerichtet, zum einen kurze Reaktionszeiten der Sicherheitssteuerung zu ermöglichen und zum anderen einen möglichen Jitter in der Prozesszeit zu minimieren.

## Patentansprüche

1. Sicherheitssteuerung zum Steuern einer automatisierten Anlage (10) gemäß einem in ihr ablaufenden Anwenderprogramm,
mit einer Vielzahl von Steuerungskomponenten (26), wobei zumindest ein Teil der Steuerungskomponenten (26) jeweils eine Datenbusschnittstelle (46, 46', 46", 46"', 46"") aufweist, die dazu ausgebildet ist, Daten zu empfangen und zu versenden,
mit einem Datenbus (34, 116), an den die Vielzahl von Steuerungskomponenten (26, 28, 80, 82, 90, 92) über die jeweilige Datenbusschnittstelle (46, 46', 46", 46"', 46"") zum Austausch von Daten angeschlossen sind, und
mit einer Konfigurationsschnittstelle (124, 130, 136), die dazu ausgebildet ist, Konfigurationsdaten (58) zu empfangen, wobei die Konfigurationsdaten (58) in Abhängigkeit von Zuordnungsdaten (120) ermittelt sind und zumindest eine Eigenschaft des Datenbusses (34, 116) und/oder zumindest einer Datenbusschnittstelle (46, 46', 46", 46"', 46"") festlegen, um Kommunikationsbeziehungen zwischen den einzelnen Steuerungskomponenten (26) zu konfigurieren,
wobei das Anwenderprogramm aus einer Vielzahl von Steueranweisungen (E1, E2, K1, K2) besteht, die eine Vielzahl von Daten erzeugenden Steueranweisungen (E1, E2) und eine Vielzahl von Daten konsumierenden Steueranweisungen (K1, K2) umfassen,
**dadurch gekennzeichnet, dass** die Zuordnungsdaten (120) Verarbeitungszuordnungsdaten umfassen, die für zumindest einen Teil der Steueranweisungen (E1, E2, K1, K2) eine Verarbeitungsreihenfolge der einzelnen Steueranweisungen (E1, E2, K1, K2) definieren, und dass die Konfigurationsdaten Terminierungszykluszeitdaten beinhalten, die eine Terminierungszykluszeit repräsentieren, wobei die Terminierungszykluszeit einer Vielzahl von Steueranweisungen (E1, E2, K1, K2) zugrunde liegt und äquidistant beabstandete Zeitpunkte definiert, zu denen Daten, die von Daten erzeugenden Steueranweisungen erzeugt werden, einheitlich vorliegen müssen.

2. Sicherheitssteuerung nach Anspruch 1, **dadurch gekennzeichnet, dass** das Anwenderprogramm aus einer Vielzahl von Programmmodulen aufgebaut ist, wobei die Zuordnungsdaten Programmmodulzuordnungsdaten (194, 196) umfassen, die jeweils definieren, welcher Steuerungskomponente (26) das jeweilige Programmmodul zugeordnet ist.

3. Sicherheitssteuerung nach Anspruch 1 oder 2, **dadurch gekennzeichnet, dass** beim Ermitteln der Verarbeitungszuordnungsdaten berücksichtigt ist, ob es sich um Daten konsumierende Steueranweisungen (K1, K2) oder um Daten erzeugende Steueranweisungen (E1, E2) handelt.

4. Sicherheitssteuerung nach einem der vorstehenden Ansprüche, **dadurch gekennzeichnet, dass** die Konfigurationsdaten (58) ferner in Abhängigkeit einer Anzahl von vordefinierten Steuerungsparameterwerten ermittelt sind.

5. Sicherheitssteuerung nach Anspruch 4, **dadurch gekennzeichnet, dass** es sich bei den berücksichtigten Steuerungsparametem um zumindest einen der folgenden Steuerungsparameter handelt: einen ersten Steuerungsparameter, der eine Reaktionszeit repräsentiert, einen zweiten Steuerungsparameter, der eine Zykluszeit repräsentiert, und einen dritten Steuerungsparameter, der eine Abtastrate repräsentiert.

6. Sicherheitssteuerung nach einem der vorstehenden Ansprüche, **dadurch gekennzeichnet, dass** die Konfigurationsdaten (58) ferner in Abhängigkeit einer Anzahl von Datenverarbeitungskennzahlen der Steuerungskomponenten (26) ermittelt sind, wobei die Datenverarbeitungskennzahlen die Taktfrequenz eines Mikroprozessors, die Speicherkapazität eines Datenspeichers und/oder die Datenübertragungsrate des Datenbusses oder einer Datenbusschnittstelle kennzeichnen.

7. Sicherheitssteuerung nach einem der vorstehenden Ansprüche, **dadurch gekennzeichnet, dass** die Zuordnungsdaten (120), insbesondere die Programmmodulzuordnungsdaten, in Abhängigkeit einer Anzahl von Datenverarbeitungskennzahlen ermittelt sind, wobei die Datenverarbeitungskennzahlen die Taktfrequenz eines Mikroprozessors, die Speicherkapazität eines Datenspeichers und/oder die Datenübertragungsrate des Datenbusses oder einer Datenbusschnittstelle kennzeichnen.

8. Sicherheitssteuerung nach einem der vorstehenden Ansprüche, **dadurch gekennzeichnet, dass** zumindest ein Teil der Steuerungskomponenten (26) jeweils einen Datenspeicher (52, 52', 52", 52"', 52"") aufweist, der dazu ausgebildet ist, zugeführte Daten zu speichern, wobei die Sicherheitssteuerung (24) ferner eine Verteileinheit (52, 128) aufweist, die dazu ausgebildet ist, zumindest einen Teil der Konfigurationsdaten (58) über den Datenbus (34, 116) auf zumindest einen Teil der Steuerungskomponenten (26, 28, 80, 82, 90, 92) zu verteilen.

9. Sicherheitssteuerung nach Anspruch 8, **dadurch gekennzeichnet, dass** zumindest ein Teil der Konfigurationsdaten (58) redundant in den Datenspeichern (52, 52', 52", 52"', 52"") gespeichert ist.

10. Sicherheitssteuerung nach einem Anspruch 8 oder 9, **dadurch gekennzeichnet, dass** es sich bei der Verteileinheit (52, 128) um einen der Datenspeicher (52) handelt.

11. Sicherheitssteuerung nach einem der vorstehenden Ansprüche, **dadurch gekennzeichnet, dass** die Konfigurationsdaten (58) in eine Vielzahl von Datenblöcke (56, 56', 56", 56"', 56"", 118) aufgeteilt sind, wobei zumindest ein Datenblock (118) dem Datenbus zugeordnet ist und die restlichen Datenblöcke (56, 56', 56", 56"', 56"") jeweils zumindest einer der Datenbusschnittstellen (46, 46', 46", 46"', 46"") zugeordnet sind.

12. Sicherheitssteuerung nach einem der vorstehenden Ansprüche, **dadurch gekennzeichnet, dass** es sich bei den Konfigurationsdaten (58) ferner um folgende Daten handelt:
- Gültigkeitszeitdaten, die eine Gültigkeitszeitdauer repräsentieren, während der erzeugte Daten gültig sind, und/oder
- Wartezeitdaten, die eine Wartezeitdauer repräsentieren, während der eine Daten konsumierende Steueranweisung (K1, K2) auf von ihr zu konsumierende Daten wartet, und/oder
- Synchronisationsdaten, in deren Abhängigkeit die Steuerungskomponenten (26, 28, 80, 82, 90, 92) synchronisierbar sind, und/oder
- Datenrahmenzuweisungsdaten, die für zumindest eine der Steuerungskomponenten (26, 28, 80, 82, 90, 92) diejenigen Datenfelder innerhalb eines für den Datenbus (34, 116) spezifizierten Datenrahmens definieren, die der Steuerungskomponente (26, 28, 80, 82, 90, 92) für die von ihr zu sendenden Daten und für die von ihr zu empfangenden Daten zugewiesen sind.

13. Verfahren zum Erstellen eines Anwenderprogramms mit einer Vielzahl von Steueranweisungen (E1, E2, K1, K2) für eine Sicherheitssteuerung (24), die dazu ausgebildet ist, eine automatisierte Anlage (10) gemäß einem in ihr ablaufenden Anwenderprogramm zu steuern, wobei die Vielzahl von Steueranweisungen (E1, E2, K1, K2) eine Vielzahl von Daten erzeugenden Steueranweisungen (E1, E2) und eine Vielzahl von Daten konsumierenden Steueranweisungen (K1, K2) umfassen, wobei die Sicherheitssteuerung (24) aus einer Vielzahl von Steuerungskomponenten (26) aufgebaut ist und einen Datenbus (34, 116) umfasst, wobei zumindest ein Teil der Steuerungskomponenten (26) jeweils eine Datenbusschnittstelle (46, 46', 46", 46"', 46"") aufweist, die jeweils dazu ausgebildet ist, Daten zu empfangen und zu versenden, und wobei die Vielzahl von Steuerungskomponenten (26, 28, 80, 82, 90, 92) über die jeweilige Datenbusschnittstelle (46, 46', 46", 46"', 46"") an den Datenbus (34, 116) zum Austausch von Daten angeschlossen sind, mit den Schritten:
- Ermitteln von Zuordnungsdaten (120), und
- Ermitteln von Konfigurationsdaten (58) in Abhängigkeit der Zuordnungsdaten (120), um Kommunikationsbeziehungen zwischen den einzelnen Steuerungskomponenten (26) zu konfigurieren, wobei die Konfigurationsdaten (58) zumindest eine Eigenschaft des Datenbusses (34, 116) und/oder zumindest einer Datenbusschnittstelle (46, 46', 46", 46"', 46"") festlegen,
**dadurch gekennzeichnet, dass** die Zuordnungsdaten (120) Verarbeitungszuordnungsdaten umfassen, die für zumindest einen Teil der Steueranweisungen (E1, E2, K1, K2) eine Verarbeitungsreihenfolge der einzelnen Steueranweisungen (E1, E2, K1, K2) definieren, und dass die Konfigurationsdaten Terminierungszykluszeitdaten beinhalten, die eine Terminierungszykluszeit repräsentieren, wobei die Terminierungszykluszeit einer Vielzahl von Steueranweisungen (E1, E2, K1, K2) zugrunde liegt und äquidistant beabstandete Zeitpunkte definiert, zu denen Daten, die von Daten erzeugenden Steueranweisungen erzeugt werden, einheitlich vorliegen müssen.

14. Computerprogramm mit Programmcode zum Durchführen eines Verfahrens nach Anspruch 13, wenn das Computerprogramm (114) auf einem Computer (110) ausgeführt wird.

## Claims

1. A safety controller for controlling an automated installation (10) in accordance with a user program running on it,
having a plurality of control components (26), wherein at least some of the control components (26) have a respective data bus interface (46, 46', 46", 46"', 46"") which is respectively designed to receive and send data,
having a data bus (34, 116) to which the plurality of control components (26, 28, 80, 82, 90, 92) are connected via the respective data bus interface (46, 46', 46", 46"', 46"") for the purpose of interchanging data, and
having a configuration interface (124, 130, 136) which is designed to receive configuration data (58), wherein the configuration data (58) are ascertained on the basis of association data (120) and determine at least one characteristic of the data bus (34, 116) and/or of at least one data bus interface (46, 46', 46", 46"', 46"") to configure communication relationships between the individual control components (26),
wherein the user program comprises a plurality of control instructions (E1, E2, K1, K2) which comprise a plurality of data-producing control instructions (E1, E2) and a plurality of data-consuming control instructions (K1, K2)
**characterized in that** the association data (120) comprise processing association data, which define for at least some of the control instructions (E1, E2, K1, K2) a processing order for the individual control instructions (E1, E2, K1, K2), and that the configuration data (58) comprise termination cycle time data, which represent a termination cycle time, wherein the termination cycle time is the basis for a plurality of control instructions (E1, E2, K1, K2) and defines equidistantly spaced time intervals at which data produced by data-producing control instructions need to be present in standard form.

2. The safety controller of claim 1, **characterized in that** the user program is constructed from a plurality of program modules, wherein the association data comprise program module association data, wherein the program module association data represent a number of program module associations (194, 196), and wherein the program module associations (194, 196) each define which control component (26) has the respective program module associated with it.

3. The safety controller of claim 1 or 2, **characterized in that** the ascertainment of the processing association data takes account of whether data-consuming control instructions (K1, K2) or data-producing control instructions (E1, E2) are involved.

4. The safety controller of one of the preceding claims, **characterized in that** the configuration data (58) are also ascertained on the basis of a number of predefined control parameter values.

5. The safety controller of claim 4, **characterized in that** the control parameters taken into account are at least one of the following control parameters: a first control parameter, which represents a reaction time, a second control parameter, which represents a cycle time, and a third control parameter, which represents a sampling rate.

6. The safety controller of one of the preceding claims, **characterized in that** the configuration data (58) are futher ascertained on the basis of a number of data processing characteristic figures of the control components (26), wherein the data processing characteristic figures represent the clock frequency of a microprocessor, the storage capacity of a data memory and/or the data transfer rate of the data bus or a data bus interface.

7. The safety controller of one of the preceding claims, **characterized in that** the association data (120), particularly the program module association data, are ascertained on the basis of a number of data processing characteristic figures, wherein the data processing characteristic figures represent the clock frequency of a microprocessor, the storage capacity of a data memory and/or the data transfer rate of the data bus or a data bus interface.

8. The safety controller of one of the preceding claims, **characterized in that** at least some of the control components (26) have a respective data memory (52, 52', 52", 52"', 52"") which is designed to store respective data which are supplied to them, wherein the safety controller (24) also has a distribution unit (52, 128)which is designed to distribute at least some of the configuration data (58) over at least some of the control components (26, 28, 80, 82, 90, 92) via the data bus (34, 116).

9. The safety controller of claim 8, **characterized in that** at least some of the configuration data (58) are stored redundantly in the data memories (52, 52', 52", 52"', 52"").

10. The safety controller of claim 8 or 9, **characterized in that** the distribution unit (52, 128) is one of the data memories (52).

11. The safety controller of one of the preceding claims, **characterized in that** the configuration data (58) are split into a plurality of data blocks (56, 56', 56", 56"', 56""), wherein at least one data block (118) is associated with the data bus and the remaining data blocks (56, 56', 56", 56"', 56"") are each associated with at least one of the data bus interfaces (46, 46', 46", 46"', 46"").

12. The safety controller of one of the preceding claims, **characterized in that** the configuration data (58) further comprise the following data:
validity time data, which represent a validity period during which data produced are valid, and/or
waiting time data, which represent a waiting period during which a data-consuming control instruction (K1, K2) awaits data which are to be consumed by it, and/or
synchronization data, on the basis of which the control components (26, 28, 80, 82, 90, 92) can be synchronized, and/or
data frame allocation data which define for at least one of the control components (26, 28, 80, 82, 90, 92), those data fields within a data frame specified for the data bus (34, 116) which are allocated to the control components (26, 28, 80, 82, 90, 92) for the data which are to be sent thereby and for the data to be received thereby.

13. A method for generating a user program with a plurality of control instructions (E1, E2, K1, K2) for a safety controller (24) designed to control an automated installation (10) in accordance with a user program running on it, whererin the plurality of control instructions (E1, E2, K1, K2) comprise a plurality of data-producing control instructions (E1, E2) and a plurality of data-consuming control instructions (K1, K2), wherein the safety controller (24) is constructed from a plurality of control components (26) and comprises a data bus (34, 116), wherein at least some of the control components (26) have a respective data bus interface (46, 46', 46", 46"', 46""), which is respectively designed to receive and send data, and wherein the plurality of control components (26, 28, 80, 82, 90, 92) are connected to the data bus (34, 116) via the respective data bus interface (46, 46', 46", 46"', 46"") for the purpose of interchanging data, the method comprising the following steps:
- ascertaining association data (120), and
- ascertaining configuration data (58) on the basis of the association data (120) to configure communication relationships between the individual control components (26), wherein the configuration data (58) determine at least one characteristic of the data bus (34, 116) and/or of at least one data bus interface (46, 46', 46", 46"', 46""),
charactarized in that the association data (120) comprise processing association data which define for at least some of the control instructions (E1, E2, K1, K2) a processing order for the individual control instructions (E1, E2, K1, K2) and that the configuration data (58) comprise termination cycle time data, which represent a termination cycle time, wherein the termination cycle time is the basis for a plurality of control instructions (E1, E2, K1, K2) and defines equidistantly spaced time intervals at which data produced by data-producing control instructions need to be present in standard form.

14. A computer program comprising program code for carrying out a method of claim 13 when the computer program (114) is executed on a computer (110).

## Revendications

1. Commande de sécurité destinée à commander un système automatisé (10) conformément à un programme utilisateur s'exécutant dans celle-ci,
comportant une pluralité de composants de commande (26), au moins une partie des composants de commande (26) comprenant respectivement une interface de bus de données (46, 46', 46", 46"', 46"") qui est conçue pour recevoir et envoyer des données, comportant un bus de données (34, 116) auquel la pluralité de composants de commande (26, 28, 80, 82, 90, 92) sont connectés par l'intermédiaire de l'interface de bus de données respective (46, 46', 46", 46"', 46"") afin d'échanger des données, et
comportant une interface de configuration (124, 130, 136) qui est conçue pour recevoir des données de configuration (58), les données de configuration (58) étant déterminées en fonction de données d'allocation (120) et établissant au moins une propriété du bus de données (34, 116) et/ou d'au moins une interface du bus de données (46, 46', 46", 46"', 46"") pour configurer des relations de communication entre les composants de commande individuels (26),
dans lequel le programme d'application est constitué d'une pluralité d'instructions de commande (E1, E2, K1, K2) qui comprennent une pluralité d'instructions de commande génératrices de données (E1, E2) et une pluralité d'instructions de commande consommatrices de données (K1, K2),
**caractérisée en ce que** les données d'allocation (120) comprennent des données d'allocation de traitement qui définissent, pour au moins une partie des instructions de commande (E1, E2, K1, K2), une séquence de traitements des instructions de commande individuelles (E1, E2, K1, K2) et **en ce que** les données de configuration contiennent des données de temps de cycle de planification qui représentent un temps de cycle de planification, le temps de cycle de planification étant à la base d'une pluralité d'instructions de commande (E1, E2, K1, K2) et définissant des instants régulièrement espacés auxquels des données qui sont générées par des instructions de commande génératrices de données, doivent être présentes de manière unique.

2. Commande de sécurité selon la revendication 1, **caractérisée en ce que** le programme d'application est réalisé à partir d'une pluralité de modules de programmes, les données d'allocation comprenant des données d'allocation de modules de programmes (194, 196) qui définissent respectivement les composants de commande (26) auxquels est affecté le module de programme respectif.

3. Commande de sécurité selon la revendication 1 ou 2, **caractérisée en ce que** lors de la détermination des données d'allocation de traitement, il est tenu compte du fait qu'il s'agit ou non d'instructions de commande consommatrices de données (K1, K2) ou d'instructions de commande génératrices de données (E1, E2).

4. Commande de sécurité selon l'une quelconque des revendications précédentes, **caractérisée en ce que** les données de configuration (58) sont en outre déterminées en fonction d'un nombre de valeurs prédéfinies de paramètres de commande.

5. Commande de sécurité selon la revendication 4, **caractérisée en ce que** les paramètres de commande pris en compte sont au moins l'un des paramètres de commande suivants : un premier paramètre de commande qui représente un temps de réaction, un deuxième paramètre de commande qui représente un temps de cycle et un troisième paramètre de commande qui représente une fréquence d'échantillonnage.

6. Commande de sécurité selon l'une quelconque des revendications précédentes, **caractérisée en ce que** les données de configuration (58) sont en outre déterminées en fonction d'un certain nombre de numéros d'identification de traitements de données des composants de commande (26), les numéros d'identification de traitements de données caractérisant la fréquence d'horloge d'un microprocesseur, la capacité de mémoire d'une mémoire de données et/ou le débit de transmission de données du bus de données ou d'une interface de bus de données.

7. Commande de sécurité selon l'une quelconque des revendications précédentes, **caractérisée en ce que** les données d'allocation (120), notamment les données d'allocation de modules de programmes, sont déterminées en fonction d'un certain nombre de numéros d'identification de traitements de données, les numéros d'identification de traitements de données caractérisant la fréquence d'horloge d'un microprocesseur, la capacité de mémoire d'une mémoire de données et/ou le débit de transmission de données du bus de données ou d'une interface de bus de données.

8. Commande de sécurité selon l'une quelconque des revendications précédentes, **caractérisée en ce qu'**au moins une partie des composants de commande (26) comprend respectivement une mémoire de données (52, 52', 52", 52"', 52"") qui est conçue pour stocker des données fournies en entrée, la commande de sécurité (24) comprenant en outre une unité de distribution (52, 128) qui est conçue pour distribuer au moins une partie des données de configuration (58) par l'intermédiaire du bus de données (34, 116) à au moins une partie des composants de commande (26, 28, 80, 82, 90, 92).

9. Commande de sécurité selon la revendication 8, **caractérisée en ce qu'**au moins une partie des données de configuration (58) est stockée de manière redondante dans les mémoires de données (52, 52', 52", 52"', 52"").

10. Commande de sécurité selon la revendication 8 ou 9, **caractérisée en ce que** l'unité de distribution (52, 128) est l'une des mémoires de données (52).

11. Commande de sécurité selon l'une quelconque des revendications précédentes, **caractérisée en ce que** les données de configuration (58) sont divisées en une pluralité de blocs de données (56, 56', 56", 56"', 56"", 118), au moins un bloc de données (118) étant alloué au bus de données et les blocs de données restants (56, 56', 56", 56"', 56"") étant respectivement alloués à au moins l'une des interfaces de bus de données (46, 46', 46", 46"', 46"").

12. Commande de sécurité selon l'une quelconque des revendications précédentes, **caractérisée en ce que** les données de configuration (58) sont en outre les données suivantes :
- des données de temps de validité qui représentent une période de validité pendant laquelle les données générées sont valides, et/ou
- des données de temps d'attente qui représentent une période de temps d'attente pendant laquelle une instruction de commande consommatrice de données (K1, K2) attend des données qu'elle doit consommer, et/ou
- des données de synchronisation en fonction desquelles les composants de commande (26, 28, 80, 82, 90, 92) peuvent être synchronisés, et/ou
- des données d'affectation de trames de données qui, pour au moins l'un des composants de commande (26, 28, 80, 82, 90, 92), définissent les champs de données à l'intérieur d'une trame de données spécifiée pour le bus de données (34, 116), qui sont affectés aux composants de commande (26, 28, 80, 82, 90, 92) pour les données devant être émises par ceux-ci et pour les données devant être reçues par ceux-ci.

13. Procédé de construction d'un programme d'application comportant une pluralité d'instructions de commande (E1, E2, K1, K2) destinées à une commande de sécurité (24) qui est conçue pour commander un système automatisé (10) conformément à un programme d'application s'exécutant dans celle-ci, la pluralité d'instructions de commande (E1, E2, K1, K2) comprenant une pluralité d'instructions de commande génératrices de données (E1, E2) et une pluralité d'instructions de commande consommatrices de données (K1, K2), la commande de sécurité (24) étant constituée d'une pluralité de composants de commande (26) et comprenant un bus de données (34, 116), au moins une partie des composants de commande (26) comprenant respectivement une interface de bus de données (46, 46', 46", 46"', 46"") qui est respectivement conçue pour recevoir et émettre des données, et la pluralité de composants de commande (26, 28, 80, 82, 90, 92) étant connectés par l'intermédiaire de l'interface de bus de données respectives (46, 46', 46", 46"', 46"") au bus de données (34, 116) pour échanger des données, comprenant les étapes consistant à :
- déterminer des données d'allocation (120), et
- déterminer des données de configuration (58) en fonction des données d'allocation (120) afin de configurer des relations de communication entre les composants de commande individuels (26), les données de configuration (58) établissant au moins une propriété du bus de données (34, 116) et/ou d'au moins une interface du bus de données (46, 46', 46", 46"', 46""),
**caractérisé en ce que** les données d'allocation (120) comprennent des données d'allocation de traitements qui définissent, pour au moins une partie des instructions de commande (E1, E2, K1, K2), une séquence de traitements des instructions de commande individuelles (E1, E2, K1, K2), et **en ce que** les données de configuration contiennent des données de temps de cycle de planification qui représentent un temps de cycle de planification, le temps de cycle de planification étant à la base d'une pluralité d'instructions de commande (E1, E2, K1, K2) et définissant des instants régulièrement espacés auxquels des données qui sont générées par des instructions de commande génératrices de données, doivent être présentes de manière unique.

14. Programme informatique comportant un code de programme destiné à mettre en oeuvre un procédé selon la revendication 13, lorsque le programme informatique (114) est exécuté sur un ordinateur (110).
